# EUROPÄISCHE PATENTSCHRIFT

(11) **EP 3 869 183 B1**
(45) Veröffentlichungstag und Bekanntmachung des Hinweises auf die Patenterteilung: **24.09.2025**
(21) Anmeldenummer: 20158947.0
(22) Anmeldetag: 24.02.2020
(51) Int. Cl.: G01N 21/64, G01N 21/25, G01N 21/51, G01N 21/76, G01N 21/47

(54) **VORRICHTUNG ZUR ERMITTLUNG OPTISCHER EIGENSCHAFTEN VON PROBEN**
DEVICE FOR DETERMINING THE OPTICAL PROPERTIES OF SAMPLES
DISPOSITIF DE DÉTERMINATION DE CARACTÉRISTIQUES OPTIQUES D'ÉCHANTILLONS

(43) Veröffentlichungstag der Anmeldung: 25.08.2021
(73) Patentinhaber: Berthold Technologies GmbH & Co. KG, 75323 Bad Wildbad (DE)
(72) Erfinder: Berthold, Fritz, 75173 Pforzheim (DE); Hafner, Klaus, 04157 Leipzig (DE); Klaiber, Norbert, 75337 Enzklösterle (DE)
(74) Vertreter: Patentanwälte Ruff, Wilhelm, Beier, Dauster & Partner mbB

(56) Entgegenhaltungen:
- EP-A1- 1 156 321
- EP-A1- 3 499 200
- EP-B1- 2 284 521
- WO-A1-2018/033600
- CH-A2- 711 376
- DE-A1- 102013 224 463
- DE-A1- 102018 200 646
- DE-A1- 19 810 615
- JP-A- S6 266 141

## Beschreibung

### ANWENDUNGSGEBIET UND STAND DER TECHNIK

Die Erfindung betrifft eine Vorrichtung zur Ermittlung optischer Eigenschaften von Proben, die in einer Matrixanordnung in Näpfchen einer Mikrotiterplatte angeordnet sind.

Optische Verfahren gehören zu den wichtigsten Untersuchungsverfahren in der biochemischen und pharmakologischen Forschung. Zur Messwerterfassung werden Vorrichtungen zur Ermittlung von optischen Eigenschaften von Proben eingesetzt. Diese können z.B. auf ein bestimmtes Messverfahren, z.B. auf Fluoreszenzmessungen, spezialisiert sein oder als Multi-Technologie-Geräte, z.B. sogenannte Multi-Label-Reader (MLR) oder Multi-Mode-Reader, ausgelegt sein, die für zwei oder mehr unterschiedliche Messverfahren genutzt werden können, z.B. für Fluoreszenzmessungen, Lumineszenzmessungen, Absorptionsmessungen etc.

Zur Durchführung der Untersuchungen werden häufig Probenmultiplex-Verfahren angewandt, bei denen die zu untersuchenden Proben in einer Matrixanordnung in Näpfchen (wells) einer Mikrotiterplatte (microwell plate) angeordnet sind und entweder sequentiell oder parallelisiert untersucht werden. Die Art der untersuchten Proben ist hierbei äußerst vielfältig. Sie kann bei biologischen Proben z.B. von homogenen Lösungen bis zu immobilisierten Zellen reichen.

Die Anmeldung befasst sich mit derartigen Vorrichtungen, die u.a. zur nephelometrischen Messung von Proben geeignet sind. Für eine nephelometrische Messung wird eine Probe in einem Näpfchen angeordnet, das einen transparenten, also für das verwendete Messlicht durchlässigen, Boden hat.

Die Nephelometrie ist ein optisches Messverfahren zur quantitativen Bestimmung des Teilchen-Anteils in Suspensionen oder Aerosolen aus der Intensität des Streulichtes, das infolge des Tyndall-Effektes an schwebenden Teilchen entsteht. Der Begriff "Streulicht" bezeichnet hierbei Licht, welches aufgrund von Streuung aus seiner ursprünglichen Ausbreitungsrichtung abgelenkt wurde. Ein Zusammenhang zwischen Trübungsgrad und Gehalt an trübenden Stoffen ist durch die Rayleigh-Gleichung gegeben, wonach die von einer trüben Lösung gestreute Lichtintensität proportional der Intensität der einfallenden Strahlung, der Teilchenzahl und der sechsten Potenz des Radius der Teilchen sowie umgekehrt proportional dem Quadrat des Abstandes vom beleuchteten Volumenelement und der vierten Potenz der Wellenlänge des einfallenden Lichtes ist. Unter gleichen Bedingungen und bei gleicher Größe der streuenden Teilchen ist die Intensität des Streulichtes also der Anzahl der streuenden Teilchen proportional, was zur quantitativen Analyse ausgenutzt werden kann.

Die Intensität der Streustrahlung lässt sich entweder direkt messen (Streulichtmessung) oder aus der Schwächung des durchgelassenen Lichtes indirekt ermitteln. Die Streulichtmessung (auch Tyndallometrie genannt) wird meist im rechten Winkel zur Primärstrahlung vorgenommen. Bei der Trübungsmessung (Turbidimetrie) wird der Teil der Primärstrahlung, der gestreut wird, aus der Differenz von eingestrahltem und durchgelassenem Licht ermittelt.

Die DE 35 35 652 A1 beschreibt ein für die Nephelometrie geeignetes System, welches mit Mikrotiterplatten arbeiten kann. Die Probe wird in senkrechter Richtung von unten nach oben durchstrahlt. Das System kann mit einer mechanischen Bewegungseinrichtung zur horizontalen Positionierung der Proben ausgerüstet werden.

Die Patentschrift EP 0 864 083 B1 offenbart ein Nephelometer. Ziel der Erfindung ist es, mit hoher Empfindlichkeit und frei von störendem Hintergrundsignal matrixförmig angeordnete Proben in oben offenen Gefäßen nephelometrisch vermessen zu können. Das Nephelometer umfasst eine Beleuchtungsvorrichtung zum Beaufschlagen einer Probe mit Licht, wobei die Beleuchtungsvorrichtung eine Lichtquelle, eine Austrittslinsenanordnung und eine Austrittsöffnungsblende aufweist, die in dieser Reihenfolge auf einer gemeinsamen, von der Lichtquelle ausgehenden optischen Achse angeordnet sind. Weiterhin hat das Nephelometer eine Detektorvorrichtung zum Erfassen des von der Probe ausgehenden Streulichts, wobei die Detektorvorrichtung ein Zentralabschattungselement zum Absorbieren von durch die Probe direkt hindurchtretendem und auf die Detektorvorrichtung auftreffendem Licht der Lichtquelle, eine Detektoreintrittslinsenanordnung, ein zweites Abschattungselement zum Absorbieren von direkt aus der Austrittsöffnungsblende der Beleuchtungsvorrichtung auf die Detektorvorrichtung auftreffendem Licht der Lichtquelle und einen Detektor aufweist, die in dieser Reihenfolge auf der optischen Achse angeordnet sind, wobei die Austrittsöffnungsblende der Beleuchtungsvorrichtung und die Eintrittslinsenanordnung sowie die beiden Abschattungselemente der Detektorvorrichtung derart angeordnet sind, dass sich das Zentralabschattungselement in einer zur Lichtquelle konjugierten Ebene und das zweite Abschattungselement in einer zur Austrittsöffnungsblende konjugierten Ebene befinden.

Die Firma BMG LABTECH GmbH (Offenburg, Deutschland) bietet unter der Bezeichnung NEPHELOstar^{®} ein laser-basiertes Nephelometer an, mit dem in Mikrotiterplatten gehaltene Proben nephelometrisch gemessen werden können. Es wird eine hochintensive Lichtquelle in Form einer Laserdiode verwendet, die bei 635 nm einen stark kollimierten Laserstrahl aussendet, dessen Intensität und Strahlbreite einstellbar sind. Der Laserstrahl durchdringt die Probe senkrecht von oben nach unten und gelangt nach Durchtritt durch den transparenten Boden in einen Streulicht-Detektor mit einer Ulbricht-Kugel. Eine Ulbricht-Kugel ist eine innen diffus reflektierende Hohlkugel. Der zugehörige photosensitive Detektor ist an einer seitlichen Lichtaustrittsöffnung der Ulbricht-Kugel angebracht. Wenn das Licht nicht von Partikeln der Probe abgelenkt wird, sondern durch die Ulbricht-Kugel direkt hindurchgeht, wird am Detektor kein Signal erzeugt. Wenn in der Probe Partikel vorhanden sind, wird das Licht gestreut und im Inneren der Ulbricht-Kugel mehrfach reflektiert, bevor es zum Detektor gelangt, der ein entsprechendes Signal erzeugt.

Die CH 711376 A2 offenbart ein Beispiel einer Vorrichtung zur Ermittlung optischer Eigenschaften von Proben, die in einer Matrixanordnung in Näpfchen einer Mikrotiterplatte angeordnet sind. Die Vorrichtung umfasst eine Lichtquellenanordnung mit wenigstens einer Lichtquelle sowie einen Anregungspfad zur Übertragung von Licht der Lichtquelle als Anregungslicht von einer oben liegenden Lichteintrittsseite in eine in einer Probenebene liegende Messposition, in der eine Probe angeordnet oder anordenbar ist, die in einem Näpfchen einer Mikrotiterplatte aufgenommen ist. Ein winkel-selektiver Emissionspfad führt an der Lichteintrittsseite von der Messposition zu einem ersten Detektor. Im Emissionspfad ist ein Hohlspiegel mit einer zu einer optischen Achse des Emissionspfades rotationssymmetrischen Spiegelfläche zum Sammeln von divergent nach oben aus der Probe austretendem Emissionslicht angeordnet. Der Hohlspiegel hat an seiner der Probenebene zugewandten Lichteintrittsseite eine Lichteintrittsöffnung erweitert sich zu einer dem ersten Detektor optisch zugewandten Lichtaustrittsöffnung. Bei einem Ausführungsbeispiel sind die Näpfchen mit transparentem Boden ausgestattet, um Absorptionsmessungen durchführen zu können.

Die EP 3 499 200 A1 beschreibt einen durchstimmbaren Filtermonochromator zur spektralen Isolierung eines engen spektralen Passbereichs vorgebbarer Bandbreite um eine vorgebbare Zentralwellenlänge aus einer einfallenden Lichtintensität mit größerer spektraler Bandbreite, wobei die Bandbreite und die Zentralwellenlänge des spektralen Passbereichs unabhängig voneinander stufenlos einstellbar sind. Im Emissionspfad ist ein Parabolspiegel angeordnet.

Die DE 10 2013 224 463 A1 beschreibt eine Vorrichtung zur Ermittlung von Fluoreszenzeigenschaften von Proben.

Die Dokumente DE 10 2018 200646 A1, WO 2018/033600 A1, EP 2 284 521 B1 und JP S62 66141 A offenbaren weitere Beispiele für Vorrichtungen zur Ermittlung optischer Eigenschaften von Proben.

### AUFGABE UND LÖSUNG

Es ist eine Aufgabe der Erfindung, eine Vorrichtung zur Ermittlung optischer Eigenschaften von Proben, die in einer Matrixanordnung in Näpfchen einer Mikrotiterplatte angeordnet sind, bereitzustellen, die u.a. für nephelometrische Messungen geeignet ist, dafür gegenüber dem Stand der Technik eine höhere Empfindlichkeit aufweist und die Möglichkeit bietet, alternativ oder zusätzlich zu nephelometrischen Messungen an derselben Probe gleichzeitig oder kurz hintereinander andere Messtechniken nutzen zu können, ohne die Probe neu positionieren zu müssen.

Zur Lösung dieser Aufgabe stellt die Erfindung eine Vorrichtung mit den Merkmalen von Anspruch 1 bereit. Vorteilhafte Weiterbildungen sind in den abhängigen Ansprüchen angegeben. Der Wortlaut sämtlicher Ansprüche wird Bezugnahme zum Inhalt der Beschreibung gemacht.

Die Vorrichtung ist u.a. zur nephelometrischen Messung von Proben geeignet, die in einer Matrixanordnung in Näpfchen einer Mikrotiterplatte angeordnet sind. Die Vorrichtung kann als Bestandteil eines Mikroplatten-Lesegeräts verwendet werden. Die Vorrichtung kann auch für andere Messverfahren genutzt werden. In manchen Ausführungsformen kann die Vorrichtung für Nephelometrie, Turbidimetrie, Fluoreszenzmessungen, Absorptionsmessungen und Chemilumineszenzmessungen in Mikroplatten genutzt zu werden.

Die Vorrichtung hat eine Lichtquellenanordnung mit wenigstens einer Lichtquelle. Es kann sich um eine einzige Lichtquelle handeln oder um mehrere, von denen jeweils eine für eine Messung ausgewählt werden kann.

Ein optisch nachgeschalteter Anregungspfad dient zur Übertragung von Licht der Lichtquelle als Anregungslicht in eine Messposition. Der Anregungspfad kann ein optisches Element oder mehrere optische Elemente zur Beeinflussung des von der Lichtquelle kommenden Lichts enthalten. Im Anregungspfad kann z.B. mindestens ein optisches Element zu Anpassung der Lichtquelle an die Strahlform für den Probenbehälter, mindestens ein optisches Element zum Beeinflussen der an der Probe wirksamen Frequenz bzw. Wellenlänge des Anregungslichtes (z.B. Filter oder Monochromator) und/oder mindestens ein richtungsänderndes Element vorgesehen sein. Es ist auch möglich, dass sich zwischen Lichtquelle und Messposition im Anregungspfad kein optisches Element befindet, so dass das von der Lichtquelle kommende Licht unmittelbar bzw. direkt zur Probe gelangt.

Die Messposition liegt in einer Probenebene. Die Messposition ist diejenige Position, in der (bei einer Messung) eine Probe angeordnet ist oder in der eine Probe für eine Messung angeordnet werden kann. Die Probe ist beim Messen in einem mit transparentem Boden ausgestatteten Näpfchen einer Mikrotiterplatte aufgenommen.

Das Anregungslicht tritt von einer Lichteintrittsseite in die Probe bzw. in die Probenebene ein. Auf einer gegenüberlegenden Lichtaustrittsseite tritt Licht nach Wechselwirkung mit der Probe aus. Die Vorrichtung hat einen ersten Detektor, bei dem es sich um einen lichtempfindlichen bzw. photosensitiven Detektor handelt.

Das Anregungslicht durchläuft die Probe in der Regel als paralleles Bündel oder konvergent mit sehr geringem Strahlwinkel zur optischen Achse des Anregungspfades, wobei der Querschnitt des Bündels möglichst klein sein sollte, auf alle Fälle kleiner als die Probe im Näpfchen.

Das Anregungslicht tritt beim Durchtritt durch die Probe in Wechselwirkung mit der Probe. Der Bereich, in welchem die Wechselwirkung zwischen Anregungslicht und Probenmaterial stattfindet, wird hier als Messvolumen bezeichnet. Das Messvolumen ist somit das Schnittvolumen zwischen Anregungslicht und Probe. Das aus der Wechselwirkung des Anregungslichtes mit der Probe resultierende Licht wird in dieser Anmeldung als "Emissionslicht" oder "emittiertes Licht" bezeichnet. Das Emissionslicht stammt somit aus dem mit Anregungslicht durchstrahlten Messvolumen.

Abhängig von der Art der Wechselwirkung kann man unterschiedliche Arten von Emissionslicht unterscheiden.

Findet keine Wechselwirkung statt oder besteht die Wechselwirkung alleine in einer Absorption eines Teils des Anregungslichts, so breitet sich das resultierende Emissionslicht in derselben Ausbreitungsrichtung bzw. mit denselben Strahlwinkeln aus wie das Anregungslicht. Es findet also beim Durchtritt durch die Probe keine Winkeländerung der Lichtstrahlen statt.

Es gibt auch Wechselwirkungen, die bewirken, dass das daraus resultierende Emissionslicht eine andere Ausbreitungsrichtung erhält als das verursachende Anregungslicht. Zu den derart winkelverändernden Wechselwirkungen gehören u.a. die Streuung und die Erzeugung von Fluoreszenzlicht.

Unter "Streuung" von Licht wird in dieser Anmeldung allgemein die Ablenkung von Licht durch Wechselwirkung mit einem lokalen anderen Objekt (Streuzentrum) bezeichnet. "Streuung" ist die Winkelveränderung des Lichtes in eine (theoretisch unendliche) Vielzahl von Richtungen mit einer Intensitätscharakteristik, die z.B. von "keulenförmig" bis "isotrop" reichen kann. Damit hat das aus der Wechselwirkung "Streuung" entstandene Emissionslicht eine völlig andere Ausbreitungscharakteristik als das Anregungslicht.

Fluoreszenz ist bekanntlich die spontane Emission von Licht kurz nach der Anregung eines Materials durch Anregungslicht. Das abgegebene Fluoreszenzlicht ist in der Regel gegenüber dem Anregungslicht in den langwelligen Bereich des Lichtspektrums verschoben (Stokes-Shift) Fluoreszenz resultiert in einer anderen Variante des Emissionslichtes. Das Fluoreszenzlicht breitet sich mehr oder weniger isotrop aus. Damit breitet sich ein überwiegender Anteil des Fluoreszenzlichts in einer Ausbreitungsrichtung aus, die sich von der Ausbreitungsrichtung des Anregungslichts unterscheidet.

Das Emissionslicht, welches die Probe zur Lichtaustrittsseite verlässt, kann in Abhängigkeit von seiner Ausbreitungsrichtung in zwei Typen eingeteilt werden.

Emissionslicht vom ersten Typ, auch erstes Emissionslicht genannt, ist Emissionslicht, dessen Ausbreitungsrichtung gegenüber der Ausbreitungsrichtung des Anregungslichts winkelverändert ist, das sich also in andere Winkel bzw. Richtungen ausbreitet als Anregungslicht, welches ohne winkelverändernde Wechselwirkung mit der Probe durch diese hindurchgetreten ist. Erstes Emissionslicht kann auch als "winkelverändertes Emissionslicht" bezeichnet werden und kann z.B. aus Streuung resultierendes Streulicht und/oder aufgrund von Fluoreszenz generiertes Fluoreszenzlicht enthalten.

Emissionslicht vom zweiten Typ, auch zweites Emissionslicht genannt, ist Emissionslicht, dessen Ausbreitungsrichtung gegenüber der Ausbreitungsrichtung des Anregungslichts unverändert bzw. im Wesentlichen unverändert ist. Zweites Emissionslicht breitet sich somit im Wesentlichen so aus, wie sich das Anregungslicht ohne Wechselwirkung mit der Probe ausbreiten würde und kann daher auch als "nicht-winkelverändertes Emissionslicht" bezeichnet werden.

Die Vorrichtung ist konstruktiv so ausgelegt, dass sie zwischen erstem und zweitem Emissionslicht unterscheiden kann. Dazu weist die Vorrichtung einen winkel-selektiven Emissionspfad auf, der von der gegenüber der Lichteintrittsseite liegenden Lichtaustrittsseite der Messposition zu dem ersten Detektor führt. Der winkel-selektive Emissionspfad ist derart ausgebildet, dass wenigstens ein Anteil des ersten Emissionslichts (winkelverändertes Emissionslicht) auf eine sensitive Fläche des ersten Detektors fällt, während zweites Emissionslicht nicht zum ersten Detektor gelangt. Der erste Detektor kann erstes Emissionslicht, z.B. Streulicht und/oder Fluoreszenzlicht, empfangen und daraus Detektorsignale erzeugen. Detektorsignale des ersten Detektors werden im Folgenden auch als erste Signale bezeichnet.

Der Begriff des winkel-selektiven Emissionspfades bezeichnet einen Emissionspfad, der das emittierte Licht (Emissionslicht) in Abhängigkeit von seiner Ausbreitungsrichtung selektiv entweder zum ersten Detektor oder in eine andere Richtung führt. Die Ausbreitungsrichtung ist somit das Selektionskriterium. Der Emissionspfad ist "winkelselektiv" in dem Sinne, dass das ohne Winkeländerung hindurchgehende Licht (zweites Emissionslicht) von demjenigen Licht geometrisch separiert wird, das bei Wechselwirkung mit der Probe seine Ausbreitungsrichtung ändert, insbesondere durch Streuung, ggf. aber auch durch andere Effekte, z.B. durch Anregung von Fluoreszenz.

Im Emissionspfad ist ein Hohlspiegel mit einer zur optischen Achse des Emissionspfades (und des Hohlspiegels) rotationssymmetrischen Spiegelfläche zum Sammeln von erstem Emissionslicht (z.B. Streulicht und/oder Fluoreszenzlicht) angeordnet, wobei der Hohlspiegel an einer der Probenebene zugewandten Lichteintrittsseite eine Lichteintrittsöffnung aufweist und sich zu einer dem Detektor optisch zugewandten Lichtaustrittsöffnung erweitert. Die Lichtaustrittsöffnung ist somit größer als die Lichteintrittsöffnung. Die Spiegelfläche ist vorzugsweise kontinuierlich konkav gekrümmt, kann gegebenenfalls aber auch angenähert sein durch aufeinanderfolgende Kegelabschnitte unterschiedlicher Kegelwinkel oder durch eine Kombination aus Kegelflächen und flachen Scheiben von Kugelflächen.

Bei Verwendung eines Hohlspiegels tritt Licht über dessen Lichteintrittsöffnung in die von der Spiegelfläche des Hohlspiegels begrenzte Reflexionskammer ein, die sich von der Lichteintrittsseite zur gegenüberliegenden Lichtaustrittsseite erweitert. Durch die Anordnung kann erreicht werden, dass divergentes erstes Emissionslicht, wie z.B. Streulicht, welches unter relativ großen Winkeln bezüglich der optischen Achse des Hohlspiegels in die Reflexionskammer eintritt, auf die Spiegelfläche des Hohlspiegels trifft und durch einfache gerichtete (nicht-streuende) Reflexion an der Spiegelfläche gesammelt durch die Lichtaustrittsöffnung abgestrahlt wird. Licht-Anteile, die unter kleineren Winkeln zur optischen Achse verlaufen, können gegebenenfalls direkt, also ohne Reflexion an der Spiegelfläche, durch die Lichtaustrittsöffnung austreten.

Ein Vorteil der Verwendung eines Hohlspiegels, insbesondere eines Parabolspiegels, zum Sammeln des aus der Probe an der Lichtaustrittsseite austretenden Lichts liegt darin, dass die Sammlungswirkung bei relativ kompakter Größe des zum Sammeln genutzten optischen Elements (Hohlspiegel) erzielt werden kann. Anders ausgedrückt kann ein günstiges Verhältnis zwischen möglichst großen Erfassungswinkeln und Baugröße des optischen Elements quer zur optischen Achse erreicht werden.

Die Vorrichtung kann so konfiguriert sein, dass der Emissionspfad so ausgebildet ist, dass erstes Emissionslicht, z.B. Streulicht und/oder Fluoreszenzlicht, direkt und/oder über eine einzige Reflexion an dem Hohlspiegel zum ersten Detektor gelangt.

Unter erstem Emissionslicht, das direkt zum ersten Detektor gelangt, wird in dieser Anmeldung erstes Emissionslicht (z.B. Streulicht) verstanden, welches ohne Wechselwirkung mit einer gekrümmten optischen Fläche, also ohne Brechung an einer Linsenfläche oder Reflexion an einer konkaven Spiegelfläche eines Hohlspiegels, von der Probe zur sensitiven Fläche des Detektors gelangt.

Der Emissionspfad ist so ausgelegt, dass zusätzlich zu dem ersten Emissionslicht, welches direkt zu dem ersten Detektor gelangt, erstes Emissionslicht auch mithilfe einer einzigen Reflexion an dem Hohlspiegel zum ersten Detektor gelangen kann. Mithilfe des Hohlspiegels kann erstes Emissionslicht, das divergent aus der Probe austritt und auf die Spiegelfläche des Hohlspiegels trifft, in Richtung nachgeschalteter Komponenten gesammelt werden. Der Hohlspiegel dient also als der Messposition nachgeschaltetes, reflektives sammelndes optisches Element. Ein Anteil der divergenten Strahlung, die in Vorwärtsrichtung aus der Messposition austritt, kann mittels des Hohlspiegels gesammelt werden.

Dabei kann es sein, dass ein Anteil des erzeugten ersten Emissionslichts direkt zum ersten Detektor gelangt, während gleichzeitig ein anderer Anteil indirekt über die Reflexion an der konkav gekrümmten Spiegelfläche des Hohlspiegels zum ersten Detektor gelangt. Es ist auch möglich, dass sämtliches abgelenktes Licht, welches in den Emissionspfad gelangt, nur über Reflexion an dem Hohlspiegel zum ersten Detektor gelangt.

In jedem Fall ist sichergestellt, dass im Emissionspfad erstes Emissionslicht, insbesondere also z.B. Streulicht und/oder Fluoreszenzlicht, mit allenfalls geringem Intensitätsverlust von der Ursache der Richtungsänderung, also von der Wechselwirkung im Messvolumen in der Probe, bis zum ersten Detektor gelangen kann. Da Reflexionsschichten für Spiegel im interessierenden Wellenlängenbereich der Vorrichtung so ausgelegt werden können, dass der Reflexionsgrad weitgehend unabhängig von der Wellenlänge des Lichts ist, kann sichergestellt werden, dass im Bedarfsfall die gemessenen Werte für die Intensität des ersten Emissionslichts (also z.B. die Streulichtintensität oder die Intensität von Fluoreszenzlicht) nicht ungewollt mit der Wellenlänge des Anregungslichts variieren.

Bei bevorzugten Ausführungsformen ist der Hohlspiegel als Parabolspiegel ausgelegt. Ein Parabolspiegel ist ein Hohlspiegel, dessen Spiegelfläche als Ausschnitt eines Rotationsparaboloids beschrieben werden kann (vgl. z.B. EP 2 072 998 B1). Zwischen der Lichteintrittsöffnung und der Lichtaustrittsöffnung ist eine Reflexionskammer gebildet.

Der Hohlspiegel, insbesondere der Parabolspiegel, ist vorzugsweise das einzige abbildende reflektive optische Element im Emissionspfad. Zusätzlich kann ggf. ein ebener Umlenkspiegel nachgeschaltet sein, der z.B. aus Bauraumgründen zur Faltung des Strahlengangs oder eines Teil-Strahlengangs verwendet werden kann.

Wenn der Hohlspiegel als Parabolspiegel oder als angenäherter Parabolspiegel ausgelegt ist, dann kann der Hohlspiegel so ausgelegt und angeordnet sein, dass ein Brennpunkt des Parabolspiegels im Bereich des Probenvolumens, also oberhalb des transparenten Bodens des Näpfchens liegt. Das an der Spiegelfläche des Hohlspiegels reflektierte abgelenkte Licht, also z.B. Streulicht, kommt dann mehr oder weniger gut parallelisiert aus der Lichtaustrittsöffnung heraus, wodurch u.a. eine evtl. nachfolgende spektrale Filterung präziser möglich ist. Divergent aus der Probe an der Lichtaustrittsseite austretendes Licht kann damit gesammelt, insbesondere weitgehend parallelisiert, werden.

Durch die Nutzung eines Hohlspiegels, insbesondere eines Parabolspiegels, im Emissionspfad optisch hinter der Lichtaustrittsseite der Probenebene kann auf refraktive optische Elemente zum Sammeln des divergent aus der Probe austretenden abgelenkten Lichts verzichtet werden.

Bei manchen Ausführungsformen gibt es dementsprechend im Emissionspfad zwischen Messposition und erstem Detektor kein refraktives optisches Element, insbesondere keine Sammellinse.

Eine Sammellinse kann jedoch bei anderen Ausführungsformen im Emissionspfad hinter dem Hohlspiegel vorgesehen sein, beispielsweise wenn es gewünscht ist, einen ersten Detektor mit relativ kleiner sensitiver Fläche zu verwenden und Licht im Emissionspfad auf diese relativ kleine Fläche zu konzentrieren.

Mit der Anordnung kann aus der Probe austretendes Emissionslicht erfasst werden, das in Vorwärtsrichtung divergent aus der Probe austritt, also auf der der Lichteintrittsseite gegenüberliegenden Lichtaustrittsseite. Der Erfassungswinkel liegt dabei in der Regel bei weniger als 100°. Dieser Maximalwert kann z.B. bei Licht erreicht werden, dass unmittelbar in der Nähe des Bodens des Näpfchens innerhalb der Probe abgelenkt wird. Bezieht man sich auf Probenvolumen im Bereich des Brennpunkts des Parabolspiegels, können z.B. Erfassungswinkel im Bereich von 50° bis 60° erreicht werden. Geht man davon aus, dass das erste Emissionslicht im Wesentlichen innerhalb eines Kegels mit Kegelspitze auf der optischen Achse konzentriert ist, so entspricht der Erfassungswinkel dem an der Kegelspitze gemessenen Innenwinkel bzw. dem Doppelten des Öffnungswinkels des Kegels. Bei bevorzugten Ausführungsformen können mittlere Erfassungswinkel bis zu 60° oder bis zu 70° für die Vorwärtsstrahlung realisiert werden.

Gemäß der beanspruchten Erfindung ist der Hohlspiegel unterhalb der Probenebene angeordnet derart, dass die Lichteintrittsöffnung oberhalb der Lichtaustrittsöffnung des Hohlspiegels liegt. Damit können Messungen realisiert werden, bei denen das Anregungslicht von oben, also von der offenen Seite eines Näpfchens, in dieses eingestrahlt wird und durch den transparenten Boden hindurch nach unten austritt. Diese Anordnung hat unter anderem den Vorteil, dass kein an der Oberfläche der Probe reflektiertes Anregungslicht in den Emissionspfad gelangen und die Messung dadurch beeinträchtigen kann.

Bei nicht zur beanspruchten Erfindung gehörenden Varianten ist es möglich, die Proben von unten nach oben zu durchstrahlen. In diesem Fall würde der Hohlspiegel, insbesondere der Parabolspiegel, oberhalb der Probenebene liegen, wobei dann die kleinere Lichteintrittsöffnung unterhalb der größeren Lichtaustrittsöffnung liegt und das Anregungslicht von unten eingestrahlt wird, so dass es zunächst den transparenten Boden durchtritt, bevor es in die Probe gelangt und durch die obere Öffnung des Näpfchens in den Emissionspfad eintritt.

Eine nicht zur beanspruchten Erfindung gehörende Variante sieht ebenfalls vor, dass der Hohlspiegel, insbesondere der Parabolspiegel, oberhalb der Probenebene derart angeordnet ist, dass die kleinere Lichteintrittsöffnung unterhalb der größeren Lichtaustrittsöffnung oberhalb des Näpfchens liegt. Das Anregungslicht wird von oben eingestrahlt, so dass es zunächst die Probe und dann den transparenten Boden durchtritt und unterhalb der Probenebene in den Emissionspfad eintritt. Zusätzlich zu dem Hohlspiegel ist ein unter der Messposition in den Emissionspfad einführbarer Planspiegel vorgesehen, der eine Durchlassöffnung zum Hindurchlassen von zweitem Emissionslicht aufweist. Wird dieser auch als Lochspiegel bezeichnete Planspiegel in einer Betriebsstellung unmittelbar unterhalb der Probenebene in den Emissionspfad so eingeführt, dass die Spiegelfläche orthogonal zur optischen Achse des Emissionspfades liegt, so wird das nicht winkelveränderte zweite Emissionslicht durch die Durchlassöffnung hindurchtreten und winkelverändertes erstes Emissionslicht von der Spiegelfläche des Planspiegels durch den transparenten Boden und die Probe hindurch in Richtung der Lichteintrittsöffnung des Hohlspiegels rückreflektiert. Der Emissionspfad führt dann also von der Lichtaustrittseite unterhalb der Probenebene erneut durch die Probe hindurch nach oben durch den Hohlspiegel zum ersten Detektor. Der erste Detektor kann dann also sowohl unmittelbar in Rückwärtsrichtung emittiertes zweites Emissionslicht empfangen als auch zunächst in Vorwärtsrichtung emittiertes zweites Emissionslicht, das nach Reflexion am Planspiegel nochmals rückwärts durch die Probe in Richtung des ersten Detektors tritt.

Bei manchen Ausführungsformen hat der erste Detektor eine sensitive Fläche, die größer ist als die Lichtaustrittsöffnung des Hohlspiegels. Dadurch kann bei Anordnung in der Nähe der Lichtaustrittsöffnung erreicht werden, dass das gesamte an der Spiegelfläche des Hohlspiegels reflektierte Licht auf die Detektorfläche gelangt ebenso wie ein größerer Anteil des direkt (ohne Reflexion an der Spiegelfläche des Hohlspiegels) aus dem Hohlspiegel austretenden Lichts. Außerdem kann erreicht werden, dass erstes Emissionslicht, welches vom Parabolspiegel zwar reflektiert wird, aber nicht parallel aus dem Parabolspiegel herauskommt, da es nicht aus dessen Brennpunkt stammt, unter schrägem Winkel noch vom Detektor erfasst werden kann.

Als erster Detektor kann z.B. eine Photomultiplier-Röhre oder ein halbleiterbasierter Detektor, wie z.B. ein Silicium-Photomultiplier (SiPM) mit entsprechend großer sensitiver Fläche verwendet werden.

Bei manchen Ausführungsformen ist vorgesehen, dass das ohne Richtungsänderung, insbesondere ohne Streuung durch die Probe hindurchgetretene Licht (zweites Emissionslicht) auf einen Lichtabsorber oder in eine Lichtfalle trifft oder durch geeignete Ablenkung so in unkritische Bereiche der Vorrichtung gelenkt wird, dass eine Störung der Messungen am durch Streuung abgelenktem Licht vermieden wird.

Andere Ausführungsformen sind gekennzeichnet durch einen zweiten Detektor zur Detektion von ohne Richtungsänderung bzw. Winkeländerung (z.B. durch Streuung und/oder Fluoreszenz) durch die Probe hindurchgetretenem Licht (zweites Emissionslicht). Mithilfe des photosensitiven zweiten Detektors ist es möglich, zweite Signale zu erzeugen, die die Intensität des ohne Winkeländerung durch die Probe hindurchgetretenen Lichts nach Durchtritt durch die Probe repräsentieren. Diese zweiten Signale können für weitere Messverfahren und/oder zur Korrektur von Messergebnissen der mithilfe des ersten Detektors durchgeführten Messverfahren genutzt werden. Einige mithilfe des zweiten Detektors durchführbaren Messverfahren werden an anderer Stelle ausführlicher erläutert.

Obwohl die sensitive Fläche des zweiten Detektors senkrecht zur optischen Achse des Emissionspfads am Ort des zweiten Detektors orientiert sein kann, ist bei bevorzugten Ausführungsformen vorgesehen, dass der zweite Detektor eine sensitive Fläche aufweist, die schräg zur optischen Achse des Emissionspfads am Ort des zweiten Detektors orientiert ist. Dadurch kann erreicht werden, dass das gegebenenfalls mit relativ hoher Intensität auftreffende, ohne Winkeländerung durch die Probe hindurchgetretene Licht nicht in den Emissionspfad zurückreflektiert wird und dort eventuell Störsignale verursacht, sondern in unkritische Bereiche außerhalb des Emissionspfads ausgekoppelt wird.

Es gibt unterschiedliche Möglichkeiten, den Emissionspfad so auszulegen, dass ein erster Detektor und ein zweiter Detektor gleichzeitig genutzt werden können.

Bei manchen Ausführungsformen weist der Emissionspfad einen auf der optischen Achse des Hohlspiegels angeordneten Umlenkspiegel zur Umlenkung des zweiten Emissionslichts in Richtung des zweiten Detektors auf. Hierdurch kann der zweite Detektor seitlich in Bezug auf die Hauptachse der Vorrichtung angeordnet sein, die entlang der Durchtrittsrichtung vom Anregungspfad zum Emissionspfad verläuft. Dadurch kann bei Bedarf der Bauraum unmittelbar anschließend an die Lichtaustrittsöffnung des Hohlspiegels für andere Komponenten genutzt werden.

Obwohl der Umlenkspiegel außerhalb der Reflexionskammer des Hohlspiegels angeordnet sein kann, ist er vorzugsweise im Inneren der Reflexionskammer, also im Bereich zwischen Lichteintrittsöffnung und Lichtaustrittsöffnung des Hohlspiegels angeordnet, wodurch unter anderem Bauraum entlang der optischen Achse gespart werden kann. Der Hohlspiegel kann in diesem Falle in der Spiegelfläche bzw. im Spiegelsubstrat eine seitliche Lichtaustrittsöffnung aufweisen.

Vorzugsweise ist der Umlenkspiegel in einem lichtundurchlässigen Winkelrohr angeordnet, das einen ersten Rohrabschnitt zum Empfangen des ohne Winkeländerung durch die Probe hindurchgetretenen Lichts (zweites Emissionslicht) und einen im Winkel zum ersten Rohrabschnitt angeordneten zweiten Rohrabschnitt zum Hinausleiten des am Umlenkspiegel reflektierten Lichts in Richtung des zweiten Detektors aufweist. Streulicht, welches eventuell bei der Reflexion am Umlenkspiegel auftreten kann, kann auf diese Weise von den Detektoren ferngehalten werden. Das Winkelrohr kann gleichzeitig als Befestigungseinheit für den Umlenkspiegel im Hohlspiegel dienen. An der Innenwandung des Winkelrohrs können Lichtfallenstrukturen zur weiteren Reduzierung des Streulichtniveaus vorgesehen sein.

Alternative Konstruktionen sind ebenfalls möglich. So kann beispielsweise der Emissionspfad so ausgelegt sein, dass das zweite Emissionslicht ohne Umlenkung zu einem Absorber, einer Lichtfalle oder einem zweiten Detektor durchgeht, während das durch Streuung und/oder auf andere Weise innerhalb der Probe bezüglich der Ausbreitungsrichtung geänderte erste Emissionslicht über einen ebenen Umlenkspiegel in Richtung des ersten Detektors umgelenkt wird. Mithilfe dieser Anordnung kann Bauraum an der Lichtaustrittsseite der Probenebene gespart werden. Beispielsweise kann ein Photomultiplier mit relativ großer sensitiver Fläche seitlich neben der Hauptachse der Vorrichtung angeordnet werden, um z.B. Streulicht nach Reflexion an dem planen Umlenkspiegel zu erfassen. Dabei kann das direkt durchgehende Licht in einem in der optischen Achse stehenden Rohr mit Lichtfallen nahe der Lichteintrittsöffnung des Hohlspiegels eingefangen werden und dann durch eine Öffnung im ebenen Umlenkspiegel zum zweiten Detektor gelangen.

Die Vorrichtung ist für nephelometrische Messungen geeignet, da der Emissionspfad winkelselektiv in dem Sinne ist, dass z.B. Streulicht, welches unter einem Winkel zum ohne Winkeländerung hindurchgetretenen Licht aus dem Probenvolumen austritt, von diesem geometrisch separiert, gezielt zum ersten Detektor geleitet und dort erfasst werden kann. Die Erfinder haben erkannt, dass die optische Anordnung dadurch grundsätzlich auch dazu geeignet ist, für Fluoreszenzmessungen in Vorwärtsrichtung genutzt zu werden. Dies ist dadurch begründet, dass bei Fluoreszenzmessungen das durch Anregungslicht angeregte Probenvolumen im Prinzip isotrop Fluoreszenzlicht abstrahlt, so dass ein Anteil auch in Vorwärtsrichtung abgestrahlt wird. Dies kann als Winkeländerung bzw. Richtungsänderung in Bezug auf das Anregungslicht angesehen werden, da ein erheblicher Anteil des Fluoreszenzlichts eine andere Ausbreitungsrichtung aufweist als das erzeugende Anregungslicht. Mithilfe der optischen Anordnung ist es möglich, einen erheblichen Anteil des in Vorwärtsrichtung aus einem Probenvolumen eventuell austretenden Fluoreszenzlichts direkt und/oder über Reflexion an der Spiegelfläche des Hohlspiegels zum ersten Detektor zu führen und dort zu detektieren. Die damit erzeugbaren ersten Signale können damit auch Fluoreszenzlichtintensität repräsentieren.

Um die Vorrichtung auch für Fluoreszenzmessungen in Vorwärtsrichtung nutzen zu können, ist bei manchen Ausführungsformen eine zwischen mehreren Betriebsstellungen umschaltbare Emissionsfiltereinrichtung zur selektiven spektralen Filterung von erstem Emissionslicht vor Eintritt in den ersten Detektor vorgesehen, wobei die Emissionsfiltereinrichtung vorzugsweise eine filterfreie Betriebsstellung aufweist, in welcher Streulicht (also aufgrund von Streueffekten abgelenktes Licht) ohne Filterung hindurchtreten kann. In dieser Betriebsstellung kann filterfreie Nephelometrie betrieben werden. In einer anderen Betriebsstellung mit spektraler Filterung kann die Emissionsfiltereinrichtung als wellenlängenselektive Einrichtung zur Blockung von Licht mit Anregungswellenlänge (d.h. Licht mit der Wellenlänge des Anregungslichts) und zum Hindurchlassen von gegenüber dem Anregungslicht zu größeren Wellenlängen verschobenem Fluoreszenzlicht ausgebildet sein.

Bei manchen Ausführungsbeispielen weist die Vorrichtung an der Lichteintrittsseite der Probenebene einen vorzugsweise als Parabolspiegel ausgebildeten Hohlspiegel auf, der an seiner der Probe zugewandten Seite eine Lichteintrittsöffnung aufweist und sich zu einer im Durchmesser größeren Lichtaustrittsöffnung erweitert. Damit kann z.B. mithilfe eines dritten Detektors, der diesem Hohlspiegel optisch nachgeschaltet ist, Fluoreszenz in Rückwärtsrichtung gemessen werden. Wenn sowohl an der Lichteintrittsseite als auch an der Lichtaustrittsseite eine Detektionsmöglichkeit besteht, kann z.B. Fluoreszenz gleichzeitig bei zwei unterschiedlichen Wellenlängen gemessen werden. Der zum Sammeln von divergenter Rückwärtsstrahlung vorgesehene Hohlspiegel, insbesondere Parabolspiegel, kann zusätzlich zu einem an der Lichtaustrittsseite angeordneten Hohlspiegel, insbesondere Parabolspiegel, zum Sammeln von divergenter Vorwärtsstrahlung vorgesehen sein.

Für die Ausgestaltung der Lichtquelle gibt es unterschiedliche Möglichkeiten. Bei manchen Ausführungsformen hat eine Lichtquellenanordnung eine einzige Laserlichtquelle, bei der es sich beispielsweise um einen Laser (z.B. um eine Laserdiode) handeln kann. Eine Laserlichtquelle hat den Vorteil, dass unmittelbar stark parallelisiertes Anregungslicht erzeugt wird, welches dann in einem Laserstrahl definierter Strahlbreite zum Beispiel im Wesentlichen senkrecht zur Probenebene durch das Probenvolumen geschickt werden kann. Es können relativ kleinflächige Einrichtungen ausreichen, um das ohne Streuung durch die Probe hindurchgetretene Licht aufzufangen oder auf einen zweiten Detektor umzuleiten.

Die Lichtquellenanordnung kann auch mehrere Lichtquellen zur Abgabe unterschiedlicher Wellenlängen sowie eine Lichtquellenselektionseinrichtung zur Auswahl einer der Lichtquellen aufweisen. Beispielsweise kann eine Gruppe von lichtemittierenden Dioden (LEDs) unterschiedlicher Abstrahlungswellenlänge genutzt werden, von denen jeweils eine in der gewünschten Lichtquellenposition im Anregungspfad positioniert werden kann.

Alternativ ist es auch möglich, dass die Lichtquelle eine polychromatische Lichtquelle ist und im Anregungspfad zwischen der Lichtquelle und der Messposition eine einstellbare wellenlängenselektive Einrichtung angeordnet ist, mit der aus dem breiten Spektrum der polychromatischen Lichtquelle ein schmalerer Spektralbereich ausgewählt werden kann. Bei der einstellbaren wellenlängenselektiven Einrichtung kann es sich beispielsweise um einen dispersiven Monochromator (z.B. Einfach-Monochromator oder Doppel-Monochromator) oder um eine Filterwechseleinrichtung mit mehreren Filtern unterschiedlicher Durchlasswellenlängen handeln, wobei die Filterwechseleinrichtung beispielsweise als Filterrad oder Filterschieber ausgestaltet sein kann. Es können auch durchstimmbare Filtermonochromatoren mit linear variablen Filtern als einstellbare wellenlängenselektive Einrichtung verwendet werden.

Wenn Einrichtungen zur stufenlosen oder schrittweisen Einstellung der Wellenlänge des Anregungslichts vor Eintritt in die Probe vorgesehen sind, kann bei Bedarf z.B. die Wellenlängenabhängigkeit des Streulichtsignals oder anderer mit der Vorrichtung ermittelter Signale bestimmt werden. Beispielsweise kann bei einem bestimmten Probentyp die spektrale Abhängigkeit des bei einer nephelometrischen Messung ermittelten Streulichtsignals bestimmt werden, um Aussagen über die Probeneigenschaften zu erhalten. Man kann die Streuung als Funktion der Wellenlänge auch messen, um optimale Parameter für eine Serienmessung zu finden. Da die Streulichtintensität stark von der Wellenlänge abhängt, ist es auch möglich, durch eine wellenlängenselektive Streulichtmessung Informationen über die Größenverteilung der Streupartikel innerhalb der Probe zu erhalten. Es ist auch möglich, dass je nach Probentyp unterschiedliche angepasste Wellenlängen optimal sind. Auch diese können durch Einstellung der Wellenlänge des Anregungslichts ausgewählt werden.

Für die Auswahl eines geeigneten ersten Detektors gibt es unterschiedliche Möglichkeiten. Bei manchen Ausführungsformen ist als erster Detektor ein Photomultiplier vorgesehen, der eine relativ große sensitive Fläche und hohe Empfindlichkeit haben kann. Insbesondere wenn der erste Detektor eine relativ große sensitive Fläche hat, kann er ohne Zwischenschaltung von sammelnden optischen Elementen beispielsweise unmittelbar hinter einem Hohlspiegel im Emissionspfad angeordnet werden. Die Verwendung anderer Detektortypen ist jedoch nicht ausgeschlossen. Beispielsweise kann als erster Detektor ein halbleiterbasierter Detektor, beispielsweise eine einfache Photodiode oder eine Avalanche-Diode, eingesetzt werden. Bei Bedarf kann auch ein Array mit einer Vielzahl von Si-PMT's als erster Detektor genutzt werden.

Bei manchen Ausführungsformen ist im Emissionspfad zwischen dem Hohlspiegel und dem Detektor eine sammelnd wirkende Linsenoptik angeordnet, die es ermöglicht, das Streulicht auf einen relativ kleinflächigen ersten Detektor zu konzentrieren.

Für einen eventuell vorhandenen zweiten Detektor gibt es prinzipiell die gleichen Auswahlmöglichkeiten. Da jedoch das ohne Streuung durch die Probe hindurchtretende Anregungslicht in der Regel eine wesentlich höhere Intensität hat als das Streulicht (oder Fluoreszenzlicht), kann ein relativ einfacher Detektor, zum Beispiel in Form einer Photodiode, ausreichen.

Die Vorrichtung kann als reines Nephelometer ausgelegt sein, also als eine Vorrichtung, die ausschließlich für eine nephelometrische Messung vorgesehen ist. Dabei wird ausschließlich Streulicht ausgewertet.

Die Vorrichtung kann auch als reines Fluorometer ausgelegt sein, also als eine Vorrichtung, die ausschließlich für eine Fluoreszenzmessung vorgesehen ist. Dabei wird ausschließlich Fluoreszenzlicht ausgewertet.

Vorzugsweise ist die Vorrichtung so konfiguriert, dass zwei oder mehr unterschiedliche Betriebsmodi nutzbar sind, aus denen ein Nutzer auswählen kann. Es kann sich also um eine Vorrichtung für ein Multi-Technologie-Gerät handeln.

Dazu kann eine Auswerteeinrichtung zur Auswertung von ersten Signalen des ersten Detektors und/oder von zweiten Signalen des zweiten Detektors vorgesehen sein, wobei die Auswerteeinrichtung zur Durchführung unterschiedlicher Auswerteverfahren unter Verarbeitung der ersten Signale und/oder der zweiten Signale konfiguriert ist, wobei unterschiedliche Auswerteverfahren auswählbar sind.

Insbesondere können zwei oder mehr der folgenden Betriebsmodi wahlweise zur Verfügung gestellt werden.

Ein erster Betriebsmodus, bei dem erste Signale (also Signale des ersten Detektors) zur Ermittlung einer ersten Messgröße verarbeitet werden, die die Intensität des Streulichts repräsentiert. Dieser Modus kann auch als "Nephelometrie-Modus" bezeichnet werden.

Ein zweiter Betriebsmodus, bei dem zwischen der Messposition und dem ersten Detektor eine wellenlängenselektive Einrichtung angeordnet wird oder angeordnet ist, die in der Lage ist, Licht mit der Wellenlänge des Anregungslichts (Anregungswellenlänge) weitestgehend zu blockieren und Fluoreszenzlicht, welches gegenüber dem Anregungslicht zu größeren Wellenlängen verschoben ist, hindurchzulassen. In diesem Betriebsmodus können erste Signale zur Ermittlung einer zweiten Messgröße verarbeitet werden, die die Intensität von Fluoreszenzlicht repräsentieren. Da es sich bei diesem Fluoreszenzlicht um Fluoreszenzlicht handelt, welches bezogen auf die Einstrahlungsrichtung des Anregungslichts generell in Vorwärtsrichtung die Probe verlässt, kann dieser zweite Betriebsmodus auch als "Vorwärts-Fluoreszenz-Modus" bezeichnet werden. Die Messung der Fluoreszenz in Vorwärtsrichtung hat gegenüber der herkömmlichen Messung von Fluoreszenz in Rückwärtsrichtung, also in der Richtung, aus der dieses Anregungslicht eingestrahlt wird, unter anderem den Vorteil, dass an der Oberfläche der Probe reflektiertes Anregungslicht nicht in den Emissionskanal gelangen kann. Beim Hohlspiegel an der Lichtaustrittsseite, also unterhalb der Probe, kann das Anregungslicht nach Durchtritt durch die Probe z.B. im Winkelrohr ausgekoppelt werden

Ein dritter Betriebsmodus, bei dem zweite Signale zur Ermittlung einer dritten Messgröße verarbeitet werden, die die Intensität des ohne Streuung durch die Probe hindurchgetretenen Lichts repräsentiert. Dieser dritte Betriebsmodus kann auch als "Lichtverlust-Modus" bezeichnet werden. Der Lichtverlust-Modus kann grundsätzlich alle Intensitätsverluste erfassen, die damit einhergehen, dass ein Teil des Anregungslichts nicht ohne Ablenkung durch die Probe hindurchgeht, sondern beim Durchtritt durch die Probe eine Ablenkung bzw. Richtungsänderung erfährt. Diese Richtungsänderung kann mehrere Ursachen haben. Sofern in der Probe Streuzentren beispielsweise in Form streuender Partikel, Moleküle oder dergleichen vorhanden sind, kann in dem Lichtverlust-Modus der Lichtverlust durch Streuung erfasst werden. Wenn Anregungslicht innerhalb der Probe Fluoreszenz erzeugt, bei der Fluoreszenzlicht isotrop in alle Richtungen abgestrahlt wird, führt auch dies zu einem Intensitätsverlust durch Fluoreszenz, der dazu führt, dass das am zweiten Detektor ankommende Licht eine geringere Intensität hat als das in die Probe eintretende Licht. Schließlich können im dritten Betriebsmodus auch Intensitätsverluste erfasst werden, die durch Absorption innerhalb der Probe verursacht werden. Solche Lichtverluste können beispielsweise auch an Proben auftreten, die keine Streuzentren aufweisen, also das Licht nicht streuen, und die auch keine Fluoreszenz verursachen. In diesem Fall kann der dritte Betriebsmodus auch als Absorptions-Modus bezeichnet werden.

Ein besonderer Vorteil von Ausführungsformen mit einem ersten Detektor und einem zweiten Detektor besteht darin, dass die Vorrichtung so konfiguriert sein oder werden kann, dass in einem vierten Betriebsmodus erste Signale (also Signale des ersten Detektors) und zweite Signale (also Signale des zweiten Detektors) gemeinsam verarbeitet werden. Dieser Modus kann als Kombinations-Modus bezeichnet werden.

Die gemeinsame Verarbeitung kann unabhängig voneinander erfolgen, so dass beispielsweise auf Basis der ersten Signale eine erste Messgröße ermittelt werden kann, die die Streulichtintensität repräsentiert (Nephelometrie-Modus), und gleichzeitig aus den zweiten Signalen eine dritte Messgröße ermittelt wird, die den Lichtverlust repräsentiert. Es können also zwei unterschiedliche Messgrößen gleichzeitig ermittelt werden.

Besondere Vorteile ergeben sich dann, wenn bei einer Variante des vierten Betriebsmodus erste Signale und zweite Signale gemeinsam derart verarbeitet werden, dass mithilfe der ersten Signale eine Korrektur der auf Basis der zweiten Signale ermittelten Messgröße durchgeführt wird und/oder unter Verwendung der zweiten Signale eine Korrektur der auf Basis der ersten Signale ermittelten Messgröße vorgenommen wird.

Beispielsweise ist es möglich, eine Absorptionsmessung bzw. Lichtverlustmessung durch eine nephelometrische Messung zu korrigieren. Dazu kann auf Basis der zweiten Signale ermittelt werden, in welchem Umfang Lichtverlust im Anregungslicht entstanden ist. Gleichzeitig kann auf Basis der ersten Signale ermittelt werden, welcher Anteil des Intensitätsverlusts auf Streuung, also auf Ablenkung des Anregungslichts aus der ursprünglichen Ausbreitungsrichtung, resultiert. Unter der Annahme, dass lediglich Absorption und Streuung als für den Lichtverlust ursächliche Prozesse innerhalb der Probe infrage kommen, kann damit durch die beschriebene Korrektur ermittelt werden, in welchem Umfang in der Probe tatsächlich Lichtverlust durch Absorption erfolgt. Derartige Messergebnisse sind präziser und aussagekräftiger als die Ergebnisse herkömmlicher Absorptionsmessungen, weil berücksichtigt wird, dass Intensitätsverlust innerhalb einer Probe nicht nur durch Absorption, sondern auch durch Streuung verursacht sein kann. Diese Möglichkeit der Korrektur einer Messgröße durch eine mithilfe eines anderen Detektors ermittelte andere Messgröße kann einen großen Beitrag zum besseren Verständnis von Vorgängen innerhalb der Probe leisten.

Bei der Fluoreszenzmessung von Zellen, die üblicherweise am Boden des Probennapfes sedimentieren, könnte über eine Nephelometrie-Messung vorgeprüft werden, in welchem Maße sich tatsächlich Zellen oder Zellklumpen am Boden gebildet haben. Deren Streuverhalten kann Aufschluss über die Zellgröße und Anzahl liefern und mit einer unabhängigen nachfolgenden Fluoreszenzmessung kann dann die tatsächliche Bindungsfreudigkeit des Fluoresceins oder eines anderen Fluoureszenzfarbstoffs am Zellkomplex bewertet werden. Dem liegt u.a. die Erkenntnis zugrunde, dass tote Zellen nicht binden, aber streuen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt schematisch eine erste Ausführungsform einer u.a. für nephelometrische Messungen geeigneten Vorrichtung zur Ermittlung optischer Eigenschaften von Proben mit einem Parabolspiegel an der Lichtaustrittsseite der Probenebene;
- Fig. 2: zeigt schematisch eine Ausführungsform mit zwei Parabolspiegeln;
- Fig. 3: zeigt schematisch eine Ausführungsform mit einem Laser als Lichtquelle;
- Fig. 4: zeigt schematisch eine Ausführungsform mit LED-Lichtquellen und einem horizontal angeordneten Photomultiplier;
- Fig. 5: zeigt schematisch eine Ausführungsform mit einer Sammellinse hinter einem Parabolspiegel;
- Fig. 6: zeigt schematisch eine Ausführungsform für eine Lumineszenzmessung;
- Fig. 7: zeigt schematisch eine nicht zur beanspruchten Erfindung gehörende Variante für eine Top/Top-Nephelometriemessung; und
- Fig. 8: zeigt schematisch eine nicht zur beanspruchten Erfindung gehörende Variante einer Vorrichtung, bei der Streulicht ohne Sammlung durch eine sammelnde Optik direkt auf einen Photomultiplier fällt.

### DETAILLIERTE BESCHREIBUNG DER AUSFÜHRUNGSBEISPIELE

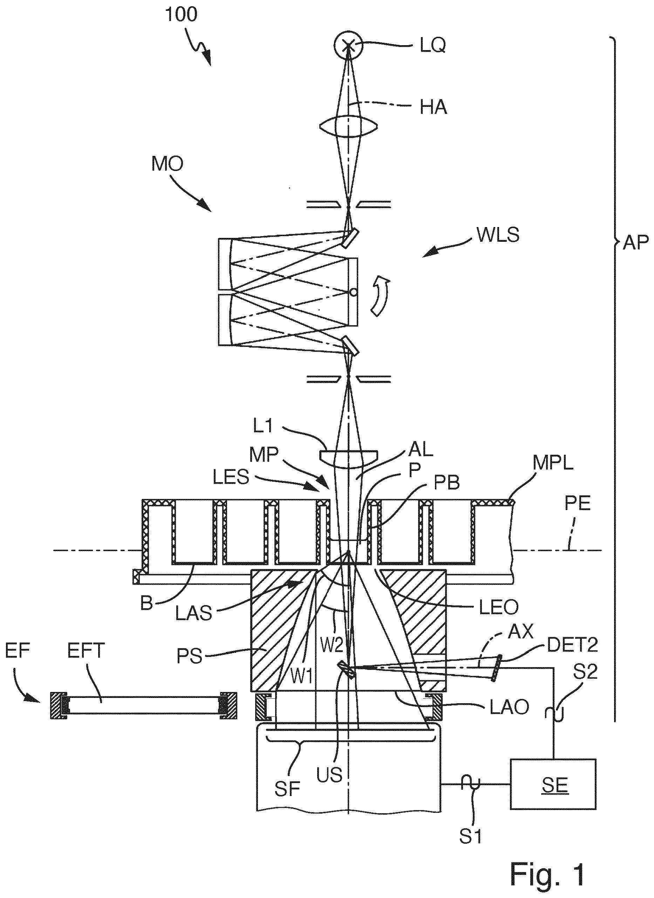

In Fig. 1 ist schematisch eine Ausführungsform einer Vorrichtung 100 zur Ermittlung optischer Eigenschaften von Proben gezeigt. Die Vorrichtung kann in mehreren unterschiedlichen Betriebsmodi für unterschiedliche Messverfahren (u.a. Nephehlometrie, Fluoreszenzmessung, Absorptionsmessung etc.) betrieben werden. Fig. 1 zeigt die Vorrichtung 100 in einer Konfiguration, bei der die optischen und anderen Komponenten so eingestellt sind, dass in einem ersten Betriebsmodus eine nephelometrische Messung durchgeführt werden kann.

In der Beschreibung werden relative Positionen optischer Elemente mit Präpositionen wie "zwischen", "vor", "hinter" oder dergleichen beschrieben. Diese Präpositionen oder Ausdrücke wie "nachgeschaltet" beziehen sich auf Positionen entlang eines optischen Pfads zwischen einer Lichtquelle über eine Messposition bis zu einem Detektor. Bezeichnungen wie "erster", "zweiter", "dritter" etc. dienen ausschließlich der eindeutigen Identifizierung der entsprechenden Elemente und beschreiben im Allgemeinen nicht die Reihenfolge, in der Elemente in einem optischen Pfad angeordnet sind.

Die zu messenden Proben werden in Probenbehälter gefüllt, die im Beispielsfall durch Vertiefungen bzw. Näpfchen in einer Mikrotiterplatte bzw. Mikroplatte MPL ausgebildet sind. Die Mikroplatte wird von einer nicht dargestellten Aufnahmeplatte aufgenommen, die motorisch parallel zu einer horizontalen Probenebene PE in zwei zueinander orthogonalen, horizontalen Richtungen verfahren werden kann. Die dargestellten Probenbehälter haben jeweils einen für sichtbares Licht transparenten Boden B. Sie sind daher unter anderem für nephehlometrische Messungen und/oder für Absorptionsmessungen und/oder Fluoreszenzmessungen in Vorwärtsrichtung geeignet.

Die Mikroplatte MPL ist im Beispielsfall so angeordnet, dass sich ein Probenbehälter PB mit einer darin befindlichen Probe P in einer Messposition MP befindet, in der eine nephelometrische Messung durchgeführt werden kann. Eine vertikale optische Hauptachse HA der Vorrichtung verläuft senkrecht zur Probenebene PE durch die Messposition MP.

Die Vorrichtung 100 hat eine primäre Lichtquelle LQ in Form einer Xenon-Lampe. Es kann sich je nach Anwendung um eine Blitzlampe oder eine Dauerstrich-Lampe handeln. Alternativ kann zum Beispiel auch eine Glühlampe (zum Beispiel eine Halogenlampe, für Dauerstrich-Betrieb) oder eine Weisslicht-LED als Lichtquelle verwendet werden. Die polychromatische Lichtquelle LQ hat ein breites Emissionsspektrum im sichtbaren Spektralbereich ("Weißlicht").

Ein Anregungspfad AP dient zur Übertragung von Licht der Lichtquelle LQ als Anregungslicht AL in die Messposition MP, in der sich die die Probe P befindet. Ein Messvolumen der Probe P wird vom Anregungslicht durchleuchtet. Das Messvolumen ist somit das Schnittvolumen zwischen Anregungslicht und Probe.

Der Anregungspfad umfasst im Beispiel eine wellenlängenselektive Einrichtung WLS in Form eines dispersiven Doppelmonochromators MO, dem eine Sammellinse L1 nachgeschaltet ist. Diejenige Seite der Probenebene, von der das Anregungslicht eingestrahlt wird, wird hier als Lichteintrittsseite LES bezeichnet.

Ein Emissionspfad EP führt unterhalb der Probenebene PE von der Messposition MP zu einem ersten Detektor DET1. Der Emissionspfad EP enthält Einrichtungen zum Übertragen von durch die Probe beeinflusstem Licht von der Probe zu dem ersten Detektor DET1. Der erste Detektor DET1 ist im Beispielfall ein Photomultiplier mit einer relativ großen photosensitiven Fläche SF. Der erste Detektor DET1 ist an die Steuereinrichtung SE angeschlossen, die auch eine Auswerteeinheit zur Auswertung der vom ersten Detektor DET1 erzeugten elektrischen ersten Signale enthält.

Die Vorrichtung 100 umfasst zusätzlich zum ersten Detektor DET1 einen photoempfindlichen zweiten Detektor DET2, der ebenfalls an die Auswerteeinheit der Steuereinrichtung SE angeschlossen ist. Der zweite Detektor DET2 wird durch eine Photodiode gebildet, deren ebene sensitive Fläche schräg zum Verlauf der optischen Achse AX am Ort des zweiten Detektors ausgerichtet ist, so dass Licht, welches an der sensitiven Fläche reflektiert wird, nicht in den Emissionspfad zurückreflektiert wird.

Der Emissionspfad EP ist als winkel-selektiver Emissionspfad ausgelegt. Dies bedeutet, dass Lichtstrahlen, die aus dem durchstrahlten Messvolumen in Vorwärtsrichtung nach unten austreten, in Abhängigkeit von ihrer Ausbreitungsrichtung bzw. ihrem Winkel in Bezug auf die Richtung ohne Winkelveränderung hindurchtretenden Anregungslichts entlang unterschiedlicher Teilpfade geleitet werden. Diese Aufteilung erfolgt durch geometrische Strahlteilung.

Zum weiteren Verständnis und zur Terminologie sei noch folgendes angemerkt. Das Anregungslicht tritt beim Durchtritt durch die Probe innerhalb des Messvolumens in Wechselwirkung mit der Probe. Das aus der Wechselwirkung des Anregungslichtes mit der Probe resultierende Licht wird in dieser Anmeldung als "Emissionslicht" oder "emittiertes Licht" bezeichnet.

Abhängig von der Art der Wechselwirkung kann man unterschiedliche Arten von Emissionslicht unterscheiden. Die Wechselwirkung kann dergestalt sein, dass sich das resultierende Emissionslicht in derselben Ausbreitungsrichtung bzw. mit denselben Strahlwinkeln ausbreitet wie das Anregungslicht. Es findet also beim Durchtritt durch die Probe keine Winkeländerung der Lichtstrahlen statt. Derartiges Emissionslicht wird hier auch als "nicht winkelverändertes Emissionslicht" oder "zweites Emissionslicht" bezeichnet.

Es gibt auch Wechselwirkungen, die bewirken, dass das daraus resultierende Emissionslicht eine andere Ausbreitungsrichtung erhält als das verursachende Anregungslicht. Zu den derart winkelverändernden Wechselwirkungen gehören u.a. die Streuung und die Erzeugung von Fluoreszenzlicht. Emissionslicht, dessen Ausbreitungsrichtung gegenüber der Ausbreitungsrichtung des Anregungslichts winkelverändert ist, das sich also in andere Winkel bzw. Richtungen ausbreitet als Anregungslicht, welches ohne winkelverändernde Wechselwirkung mit der Probe durch diese hindurchgetreten ist, wird hier auch als "erstes Emissionslicht" oder als "winkelverändertes Emissionslicht" bezeichnet.

Zum Zwecke der geometrisches Separation von erstem und zweitem Emissionslicht sind im Emissionspfad EP ein Hohlspiegel PS in Form eines sich nach unten öffnenden Parabolspiegels PS sowie ein um 45° gegenüber der Hauptachse HA geneigter ebener Umlenkspiegel US vorgesehen, der auf dieser Hauptachse angeordnet ist.

Der als Parabolspiegel ausgebildete Hohlspiegel hat eine zu seiner optischen Achse rotationssymmetrische Spiegelfläche SPF zum Sammeln von Strahlung, die in Vorwärtsrichtung divergent nach unten aus dem durchstrahlten Probenvolumen austritt. Die optische Achse des Parabolspiegels fällt mit der vertikalen Hauptachse HA der Vorrichtung zusammen. Die rotationssymmetrische Spiegelfläche SPF ist ein Ausschnitt eines Rotationsparaboloids und reicht von einer der Probenebene PE zugewandten kreisrunden oberen Lichteintrittsöffnung LEO bis zur weiter unten liegenden, im Durchmesser größeren, kreisrunden Lichtaustrittsöffnung LAO. Der Brennpunkt des die Spiegelfläche SPF definierenden Rotationsparaboloids liegt oberhalb des Niveaus des transparenten Bodens B der Mikrotiterplatte im Bereich der Probenebene, d.h. bei der Messung im Inneren des vom Anregungslicht AL durchstrahlten Probenteilvolumens.

Anders ausgedrückt gibt es einen rotationsymmetrisch zur optischen Achse des Emissionspfades EP angeordneten Abschnitt eines Hohlspiegels, dessen sammelnder Bereich (Brennpunkt) im Messvolumen der Probe liegt und dessen Öffnung zum weiteren Verlauf des Emissionspfades EP zeigt, von dem jedoch von seinem Scheitelpunkt her so viel abgetrennt ist, dass die Spiegelfläche nicht in Kollision mit Probe und dem Probenträger kommen. Der übrig bleibende Ring sammelt das Emissionslicht in einem großen Raumwinkelbereich und lenkt es in eine Richtung etwa parallel zur optischen Achse des Emissionspfades in seinem weiteren Verlauf.

Die optischen Einrichtungen des Anregungspfads AP sind so ausgelegt, dass das Anregungslicht im Wesentlichen im Bereich der Spiegelfläche des Umlenkspiegels US fokussiert wird. Licht, welches ohne Richtungsänderung durch das durchstrahlte Probenvolumen hindurchtritt (zweites Emissionslicht), trifft auf die schräggestellte ebene Spiegelfläche des Umlenkspiegels US und wird durch eine seitliche Öffnung im Spiegelkörper des Hohlspiegels hindurch auf die sensitive Fläche des zweiten Detektors DET2 reflektiert. Um hier möglichst einen zur Hauptachse rotationssymmetrischen Ausschnitt der auftreffenden Strahlung auszukoppeln, ist die Spiegelfläche des Umlenkspiegels nicht kreisrund, sondern elliptisch, so dass sie in Horizontalprojektion (auf eine Projektionsfläche parallel zur Probenebene PE) kreisrund ist.

Ein großer Anteil desjenigen Lichts, welches innerhalb der Probe beispielsweise aufgrund von Streuung seine Ausbreitungsrichtung ändert und in Vorwärtsrichtung gesehen in einem Winkel zur Hauptachse HA nach unten divergent aus der Probe austritt (d.h. erstes Emissionslicht), gelangt dagegen zur sensitiven Fläche SF des ersten Detektors DET1.

Dieses z.B. durch Streuung abgelenkte Licht (zweites Emissionslicht in Form von Streulicht) kann in zwei Anteile unterteilt werden. Diejenigen Strahlen, deren Strahlwinkel zwischen einem ersten Grenzwinkel W1 und einem zweiten Grenzwinkel W2 liegen, werden an der konkavparabolisch gekrümmten Spiegelfläche des Hohlspiegels einmal reflektiert und laufen dann mehr oder weniger parallel zur Hauptachse der Vorrichtung durch die Lichtaustrittsöffnung LAO hindurch zur sensitiven Fläche SF des ersten Detektors DET1. Diejenigen Strahlen, deren Strahlwinkel (gemessen relativ zur optischen Achse des Hohlspiegels) kleiner als W2 sind, jedoch den Umlenkspiegel US passieren können, verlaufen direkt, d.h. ohne Wechselwirkung mit einer die Strahlrichtung ändernden optischen Fläche, zur sensitiven Fläche SF des ersten Detektors DET1.

Der erste Detektor DET1 erzeugt basierend auf der Lichtintensität des auf die sensitive Fläche SF auffallenden Lichts erste Signale S1, die zum Beispiel die Gesamtintensität des auf die sensitive Fläche SF auftreffenden Lichts repräsentieren. Entsprechendes gilt für den zweiten Detektor DET2, dessen zweite Signale S2 die Intensität desjenigen Lichts repräsentieren, welches ohne Ablenkung durch die Probe hindurchtritt.

Beim Ausführungsbeispiel von Fig. 1 ist zwischen der Lichtaustrittsöffnung LAO des Hohlspiegels PS und dem ersten Detektor DET1 eine zwischen mehreren Betriebsstellungen umschaltbare Emissionsfiltereinrichtung EF zur selektiven Filterung von (erstem) Emissionslicht vor Eintritt in den ersten Detektor DET1 eingefügt. Die Emissionsfiltereinrichtung kann beispielsweise einen Filterschieber mit mehreren in einer Reihe angeordneten Aufnahmeplätzen für unterschiedliche Emissionsfilter oder ein Filterrad umfassen. Die Emissionsfiltereinrichtung hat eine filterfreie Betriebsstellung, die sich dadurch auszeichnet, dass sämtliches Licht, welches nach unten aus der Lichtaustrittsöffnung LAO des Hohlspiegels austritt, ohne optische Filterung direkt zum ersten Detektor DET1 gelangt. Diese Konfiguration ist in Fig. 1 gezeigt und kann beispielsweise gewählt werden, wenn mit der Vorrichtung nephelometrische Messungen durchgeführt werden sollen. Dabei kann aus den ersten Signalen S1 des ersten Detektors DET1 die Streulichtintensität des durch die Probe hindurchgetretenen Lichts ermittelt werden.

Die Vorrichtung 100 ist auch dazu geeignet, Fluoreszenzmessungen in Vorwärtsrichtung durchzuführen. Dabei wird der Umstand genutzt, dass Fluoreszenzlicht, welches in einer von Anregungslicht AL durchstrahlten Probe entsteht, isotrop, d.h. in alle Raumrichtungen, abstrahlt. Dasjenige Fluoreszenzlicht, welches in denjenigen vorwärts gerichteten Raumwinkel austritt, der mithilfe des Hohlspiegels PS erfasst werden kann, kann mithilfe des ersten Detektors DET1 detektiert werden.

Da Fluoreszenzlicht eine Wellenlänge hat, die gegenüber der Wellenlänge des Anregungslichts AL (Anregungswellenlänge) zu längeren Wellen verschoben ist, kann die Emissionsfiltereinrichtung EF so eingestellt werden, dass zwischen dem Hohlspiegel und dem ersten Detektor ein Emissionsfilter EFT sitzt, welches wellenlängenselektiv Licht der Anregungswellenlänge mit hoher Effizienz blockt, aber das zu größeren Wellenlängen verschobene Fluoreszenzlicht mehr oder weniger ungehindert zum ersten Detektor hindurchlässt. Damit können aus den ersten Signalen S1 Fluoreszenzintensitäten desjenigen Fluoreszenzlichts ermittelt werden, welches in Vorwärtsrichtung die Probe P verlässt.

Aufgrund des Umstands, dass die Wellenlänge des Anregungslichts bei der Vorrichtung 100 mithilfe des durchstimmbaren Monochromators stufenlos einstellbar ist, ist es mit der Vorrichtung 100 auch möglich, die Wellenlängenabhängigkeit der Streulichtintensität an Proben zu messen.

Die vom zweiten Detektor DET2 erzeugten zweiten Signale S2 können beispielsweise für eine turbidimetrische Messung (im Turbidimetrie-Modus) genutzt werden. Bei dieser Trübungsmessung wird derjenige Teil der Primärstrahlung (Anregungslicht), der gestreut wird, aus der Differenz von eingestrahltem und durchgelassenem Licht ermittelt. Im Beispielsfall wird somit die Intensität des Anregungslichts vor Eintritt durch die Probe mithilfe des zweiten Signals S2 verrechnet. Die Intensität des Anregungslichts kann z.B. durch eine Messung ohne Probe (mit leerem Probenbehälter) mittels des zweiten Detektors bestimmt werden. Alternativ ist eine Messung mit einer Referenzdiode oder einem anderen Detektor möglich, welcher bei manchen Ausführungsformen für die Intensitätsregelung bzw. die Intensitätsstabilisierung des von der Lichtquelle kommenden Anregungslichtes vorgesehen ist. Es kann also zusätzlich zum ersten und zweiten Detektor noch mindestens ein weiterer Detektor vorgesehen sein. Wird dieser für die Messung der Intensität des Anregungslichts genutzt, so können gleichzeitig der erste und der zweite Detektor für andere Messungen genutzt werden.

Es ist ersichtlich, dass mithilfe der Vorrichtung 100 bei Verwendung geeigneter Emissionsfilterung Fluoreszenz in Vorwärtsrichtung gemessen werden kann. Die Fluoreszenzmessung in Vorwärtsrichtung kann aus verschiedenen Gründen gegenüber der herkömmlich angewendeten Top-Top-Anordnung vorteilhaft sein, bei der das Anregungslicht von oben kommt und die in der Probe erzeugte Fluoreszenzstrahlung rückwärts wiederum nach oben in einen Emissionspfad eintritt. Bei diesen herkömmlichen Konstruktionen liegen also Anregungspfad und Emissionspfad auf der gleichen Seite der Probenebene. Bei der Top-Top-Anordnung ist jedoch zu beachten, dass zusätzlich zur Fluoreszenzstrahlung auch am Näpfchenrand und in der Probe erzeugtes Streulicht nach oben in den Emissionspfad emittiert werden kann. Weiterhin kann an der Probenoberfläche in den Emissionspfad reflektiertes intensives Anregungslicht in den Emissionspfad gelangen, welches vom Emissionsfilter unzureichend geblockt wird und ein nicht vom langwelligen Fluoreszenzlicht herkommendes Falschsignal erzeugen kann. Um Störeinflüsse auszuschalten, sollten diese Anteile vor Eintritt in den Detektor durch Filterung eliminiert werden. Dabei ist es allerdings erfahrungsgemäß schwierig, eine ausreichend gute Blockung zu erreichen.

Bei der hier vorgestellten Vorrichtung wird dagegen Fluoreszenzlicht gemessen, welches in Vorwärtsrichtung, also in genereller Richtung des Anregungsstrahls, emittiert wird. Die Fluoreszenzemission erfolgt im Wesentlichen isotrop, gemessen wird jedoch Fluoreszenz in demjenigen Strahlwinkel, der nach unten in den Emissionspfad EP gelangt. Die für eine empfindliche Messung erforderliche Unterdrückung der Anregungsstrahlung (bzw. des zweiten Emissionslichts) erfolgt bei dieser Anordnung durch zwei Maßnahmen, nämlich zum einen durch die geometrische Strahlteilung, bei der Licht mit der Ausbreitungsrichtung des Anregungslichts (d.h. zweites Emissionslicht) ausgeblendet und nur Emissionslicht mit anderen Ausbreitungsrichtungen zum Detektor geleitet wird, und zweitens durch eine Filterung (Emissionsfilterung) vor dem ersten Detektor in der Weise, dass im Wesentlichen nur die interessierende Fluoreszenzstrahlung durchgelassen wird. Die neuartige Anordnung bietet das Potenzial, dass der Raumwinkel für die nach unten aus dem Näpfchen austretende Fluoreszenzstrahlung deutlich größer sein kann als bei einer Emission nach oben, zumal wenn das Näpfchen nur wenig gefüllt ist. Schließlich kann noch der vorteilhafte Effekt eintreten, dass die Anregungsstrahlung durch den transparenten Boden zumindest teilweise absorbiert wird, während die längerwellige Emissionsstrahlung nicht oder weniger stark absorbiert wird. Unter anderem aus diesen Gründen erscheint die mit der Vorrichtung mögliche Fluoreszenzmessung in Vorwärtsrichtung der herkömmlichen Top-Top-Messung überlegen. Zusätzlich ergibt sich die Möglichkeit, andere Betriebsarten, wie die Nephelometrie und/oder die Turbidimetrie, mit den Ergebnissen der Fluorometrie zu kombinieren.

Weitere Vorteile der Anordnung sind, dass im Gegensatz zur Top-Top-Messung, bei der Fluoreszenzmessung in Vorwärtsrichtung keine störenden Einflüsse durch die Probenoberfläche (linsenförmige Oberfläche infolge Oberflächenspannung emittiert Fluoreszenzlicht und reflektiertes Anregungslicht mit anderen Winkeln als eine ebene Flüssigkeitsoberfläche) entstehen. Der Lichteintrittsöffnung des Parabolspiegels steht immer eine ebene Fläche, nämlich der Boden des Napfes, gegenüber. Auch unterschiedliche Füllhöhen der Probe erzeugen so weniger Varianzen im Messergebnis als bei der Top-Top-Anordnung.

Bei der nun folgenden Beschreibung anderer Ausführungsbeispiele werden aus Gründen der Übersichtlichkeit für funktional und/oder strukturell identische oder ähnliche Elemente die gleichen Bezugszeichen verwendet wie in Fig. 1.

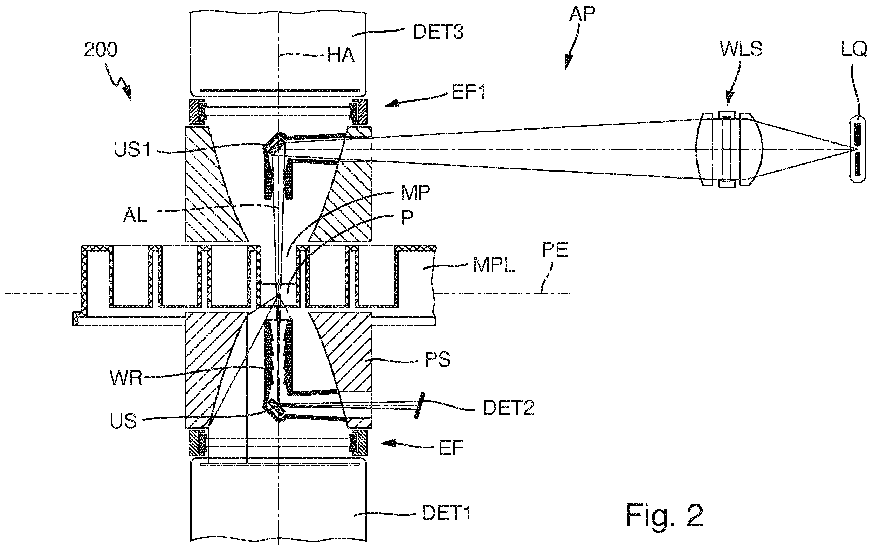

Die Vorrichtung 200 in Fig. 2 hat im Bereich der Probenebene PE sowie unterhalb der Probenebene im Emissionspfad einen sehr ähnlichen Aufbau wie das erste Ausführungsbeispiel. Ein Unterschied besteht insoweit, als dass der Umlenkspiegel US, der das ohne Richtungsänderung durch die Probe hindurchgegangene Licht (zweites Emissionslicht) in Richtung des zweiten Detektors DET2 umlenkt, im Kniebereich eines lichtdichten Winkelrohres WR angeordnet ist, welches einen koaxial zur Hauptachse HA angeordneten ersten Rohrabschnitt zum Empfangen des zweiten Emissionslichts und einen im 90°-Winkel zum ersten Rohrabschnitt angeordneten zweiten Rohrabschnitt zum Hinausleiten des am Umlenkspiegel US reflektierten zweiten Emissionslichts in Richtung des zweiten Detektors DET2 aufweist. Das Winkelrohr WR dient gleichzeitig als Halter des Umlenkspiegels US, der auf der Hauptachse HA angeordnet ist. Im Inneren des eintrittsseitigen ersten Rohrabschnitts sind Lichtfallen-Strukturen ausgebildet.

Weiterhin weist die Vorrichtung 200 an der Lichteintrittsseite der Probenebene PE einen weiteren Hohlspiegel PSO in Form eines oberen Parabolspiegels PSO auf. Dieser hat auf der unteren, der Probe zugewandten Seite eine kleine Lichteintrittsöffnung und erweitert sich nach oben parabolisch zu einer im Durchmesser größeren Lichtaustrittsöffnung. Analog zu dem auf der Lichtaustrittseite angeordneten Hohlspiegel PS dient der weitere Hohlspiegel PSO zum Sammeln von Licht, welches nach oben divergent aus der Probe P austritt. Unmittelbar hinter der Lichtaustrittsöffnung, also oberhalb des weiteren Hohlspiegels PSO, ist eine weitere Emissionsfiltereinrichtung EF1 zur selektiven spektralen Filterung des nach oben aus dem weiteren Hohlspiegel austretenden Lichts angeordnet. Darüber ist ein dritter Detektor DET3 in Form eines Photomultipliers oder in Form mehrerer flächig angeordneter Silizium PMT's, angeordnet, dessen photosensitive Fläche etwas größer als die obenliegende Lichtaustrittsöffnung des Hohlspiegels PSO und des danach folgenden Filters ist.

Der Anregungspfad AP führt von der Lichtquelle LQ über die wellenlängenselektive Einrichtung WLS in horizontaler Richtung zu einem auf der Hauptachse HA angeordneten weiteren Umlenkspiegel US1, der in 45° zur Hauptachse angestellt ist und das in Richtung des Probenvolumens fokussierte Anregungslicht AL koaxial zur Hauptachse nach unten in die Messposition MP umlenkt. Auch der weitere Umlenkspiegel US1 ist in einem Winkelrohr untergebracht, welches am Hohlspiegel PSO befestigt ist. Hier sind Lichtfallenstrukturen am austrittsseitigen Rohrabschnitt angebracht.

Obwohl die wellenlängenselektive Einrichtung WLS auch hier beispielsweise durch einen dispersiven Monochromator gebildet sein kann, ist im Beispielsfall eine Variante mit auswechselbaren spektralen Filtern vorgesehen, die im parallelen Strahlengang zwischen einer eintrittsseitigen Linse und einer austrittsseitigen Linse einer insgesamt sammelnd wirkenden Linsengruppe angeordnet sind.

Mithilfe dieser Konfiguration können zusätzlich zu einer eventuellen nephelometrischen Messung oder einer Fluoreszenzmessung an der in Richtung des ersten Detektors DET1 nach unten laufenden Vorwärtsstrahlung auch die nach oben aus dem Probenvolumen abgestrahlten Anteile von Fluoreszenzlicht (und/oder Streulicht) erfasst und mithilfe des dritten Detektors DET3 detektiert werden. Die Anordnung ist also sowohl für eine Bottom-Messung der Fluoreszenz (in Vorwärtsrichtung) als auch für eine Top-Messung der Fluoreszenz, also einer Messung im Bereich oberhalb der Probe, geeignet. Auch eine Streulichtmessung in Rückwärtsrichtung ist prinzipiell möglich.

Die Anordnung kann so beschrieben werden, dass unterhalb der Probenebene PE ein Multilabel-Reader-Teil für Nephelometrie, Turbidimetrie, Absorption sowie Fluoreszenz in Vorwärtsrichtung angeordnet ist. Oberhalb der Probenebene kann beispielsweise zeitaufgelöste Fluoreszenzmessung (TRF), homogene zeitaufgelöste Fluoreszenzmessung (HTRF), einfache Fluoreszenzmessung oder Lumineszenzmessung realisiert werden.

Ein wesentlicher Vorteil dieser Anordnung besteht darin, dass zum Beispiel Fluoreszenz gleichzeitig mit dem oben angeordneten dritten Detektor DET3 (Top-Detektor) und dem unten angeordneten ersten Detektor DET1 (Bottom-Detektor) gemessen werden kann und man auf diese Weise ein doppeltes Signal erhält. Die vom dritten Detektor DET3 erzeugten dritten Signale können mit den ersten Signalen und/oder mit den zweiten Signalen des zweiten Detektors DET2 gemeinsam ausgewertet und beispielsweise in Form einer gegenseitigen Korrektur optimiert werden.

Die zweifache gleichzeitige Fluoreszenzmessung ermöglicht nicht nur, Fluoreszenz nach oben und unten bei der gleichen Wellenlänge zu messen, sondern bei Bedarf auch bei unterschiedlichen Wellenlängen. Für solche Zwei-Filter-Messungen können ebenfalls unterschiedliche Fluoreszenztechnologien genutzt werden wie HTRF oder Biolumineszenz-Resonanzenergietransfer-(BRET)-Messungen.

Eine Variante der Vorrichtung 200, die besonders für die Messung von Fluoreszenzpolarisation nach oben geeignet ist, hat anstelle des oberen Hohlspiegels PSO eine Linsenanordnung, beispielsweise mit zwei Sammellinsen zum Einsammeln des divergent nach oben austretenden Fluoreszenzlichts.

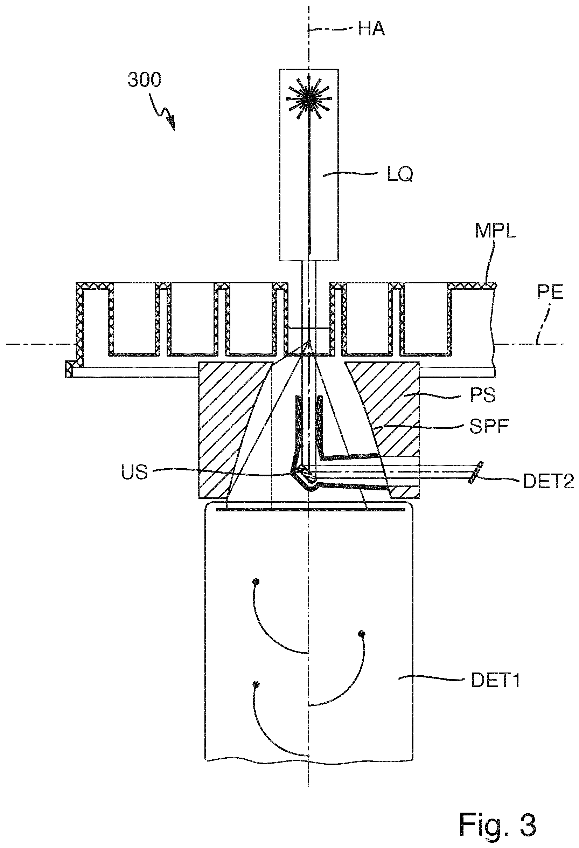

Die Vorrichtung 300 in Fig. 3 kann im Bereich der Probenebene PE und darunter ähnlich oder identisch aufgebaut sein wie das erste Ausführungsbeispiel. Auch hier ist unterhalb der Probenebene ein Hohlspiegel PS vorgesehen, der sich nach unten in Richtung des ersten Detektors DET1 öffnet, und es ist ein zweiter Detektor DET2 vorgesehen. Ein Unterschied zum ersten Ausführungsbeispiel besteht darin, dass hier als Lichtquelle LQ ein Laser oder eine Laserdiode verwendet wird, der einen koaxial zur Hauptachse HA von oben in die Probe eintretenden Laserstrahl emittiert. Die Laserlichtquelle LQ erzeugt eine ideal parallele Anregungsstrahlung. Diese wird nach Durchtritt durch den Messbehälter mittels eines gekapselten Winkelspiegels US seitlich abgelenkt und kann mithilfe des zweiten Detektors DET2 beispielsweise zu Turbidimetriemessungen dienen. Von dem innerhalb der Probe generierten Streulicht, welches nach unten, also in Vorwärtsrichtung, divergent abgeht, wird der seitlich verlaufende Anteil an der Spiegelfläche SPF des Parabolreflektors PS im Wesentlichen senkrecht nach unten zum ersten Detektor DET1 gelenkt, so dass in dieser Anordnung Nephelometrie betrieben werden kann. Streustrahlung mit kleinerem Streuwinkel kann gegebenenfalls ohne Reflexion an der parabolischen Spiegelfläche SPF direkt auf die sensitive Fläche SF des ersten Detektors DET1 gelangen. So ist gewährleistet, dass der größte Teil der Streustrahlung, welche in die Lichteintrittsöffnung des Parabolspiegels PS hineingeht, den ersten Detektor DET1 auch erreicht. Ausgenommen sind nur jene Anteile, welche vom Umlenkspiegel US und dessen Kapselung abgedeckt werden.

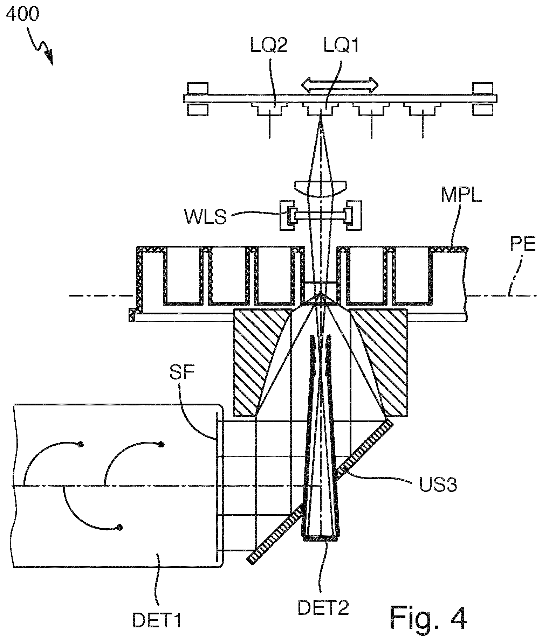

Bei der in Fig. 4 gezeigten Ausführungsform einer Vorrichtung 400 kommen als Lichtquelle lichtemittierende Dioden (LEDs) zum Einsatz. Dabei kann eine Weißlicht-LED in Verbindung mit einer nachgeschalteten wellenlängenselektiven Einrichtung WLS analog zu den Ausführungsformen der Fig. 1 oder 2 genutzt werden. Im Beispiel von Fig. 4 hat die Lichtquellenanordnung vier separate, relativ schmalbandige Farb-LEDs LQ1, LQ2 etc. Auch hier ist eine wellenlängenselektive Einrichtung WLS mit Sammellinse und nachgeschaltetem auswechselbarem Filter (Anregungsfilter) vorhanden. Optisch günstig ist unter anderem die relativ kleine Leuchtfläche von lichtemittierenden Dioden. Mit der nachgeschalteten Linse wird das Anregungslicht gesammelt und als schlankes konvergentes Strahlbündel durch den Probenbehälter geschickt.

Um Bauhöhe zu sparen, ist bei der Variante von Fig. 4 der als Photomultiplier ausgebildete erste Detektor DET1 waagerecht angeordnet. Damit das aus dem Parabolspiegel PS nach unten austretende Licht zur sensitiven Fläche SF des ersten Detektors gelangt, ist im Emissionspfad unmittelbar hinter dem Hohlspiegel ein um 45° zur Hauptachse HA geneigter ebener Umlenkspiegel US3 angeordnet, dessen relativ große Spiegelfläche in Horizontalprojektion vorzugsweise etwas größer als die Lichtaustrittsöffnung des Parabolspiegels PS ist.. Das ohne Winkeländerung durch die Probe hindurchgetretene Licht (zweites Emissionslicht) trifft dagegen ohne Umlenkung unmittelbar auf den zweiten Detektor DET2, der bei dieser Konstruktion auf der Hauptachse HA angeordnet ist. Der Winkelspiegel USP3 hat hierzu im Bereich der Hauptachse eine Durchlassöffnung, in der ein lichtdichtes Rohr sitzt, welches eintrittsseitig mit Lichtfallenstrukturen versehen ist und an seinem unten angeordneten Lichtaustritt den zweiten Detektor DET2 trägt.

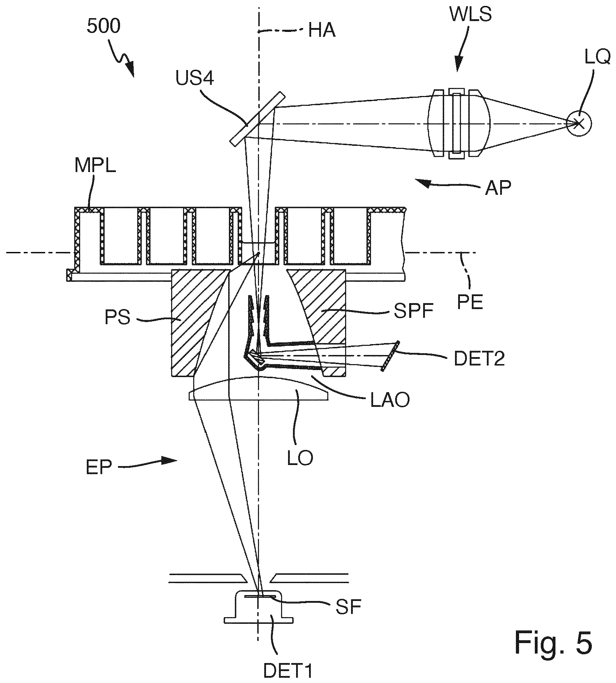

Bei der Ausführungsform der Vorrichtung 500 in Fig. 5 ist der Anregungspfad AP mithilfe eines um 45° zur Hauptachse HA schräggestellten Umlenkspiegels US4 um 90° gefaltet. Das Licht der Weißlichtquelle LQ trifft nach spektraler Filterung in der wellenlängenselektiven Einrichtung WLS und Reflexion am Umlenkspiegel US4 ähnlich wie bei der Ausführungsform von Fig. 1 von oben leicht konvergent in die Probe ein, wobei der Fokusbereich des Anregungslichts jenseits des Probenvolumens unterhalb der Probenebene PE liegt. Wie beim Ausführungsbeispiel von Fig. 1 dient der unterhalb der Probenebene angeordnete Hohlspiegel PS mit seiner Paraboloid-Spiegelfläche SPF zum Sammeln derjenigen Strahlung, die nach unten, also in Vorwärtsrichtung, divergent aus dem Probenvolumen austritt. Ein geringerer Anteil dieser divergent nach unten aus der Probe austretenden Strahlung tritt mit relativ kleinem Strahlwinkel nahe zur Hauptachse HA ohne Reflexion am Hohlspiegel aus dessen Lichtaustrittsöffnung aus.

Unmittelbar hinter der Lichtaustrittsöffnung LAO des Parabolspiegels PO ist eine sammelnd wirkenden Linsenoptik LO mit einer einzigen Sammellinse mit einer zum Hohlspiegel konvexen Lichteintrittsfläche und einer nach unten im Wesentlichen ebenen Lichtaustrittsfläche angeordnet. Mithilfe dieser sammelnd wirkenden Linsenoptik LO zwischen Hohlspiegel PS und dem ersten Detektor DET1 kann die für die Messung interessierende, divergent nach unten aus der Probe austretende Strahlung (Licht) in Richtung einer relativ kleinflächigen sensitiven Fläche SF des ersten Detektors DET1 gesammelt werden. Eine solche Lösung mit Lichtsammlung im Emissionspfad EP hinter dem Hohlspiegel kann z.B. sinnvoll sein, wenn für die Streulichtmessung ein erster Detektor DET1 verwendet werden soll, dessen sensitive Fläche kleiner als die Lichtaustrittsöffnung des Parabolspiegels PS ist. Bei dem ersten Detektor DET1 kann es sich beispielsweise um eine Avalanche-Diode oder ein Silizium PMT hoher Empfindlichkeit handeln.

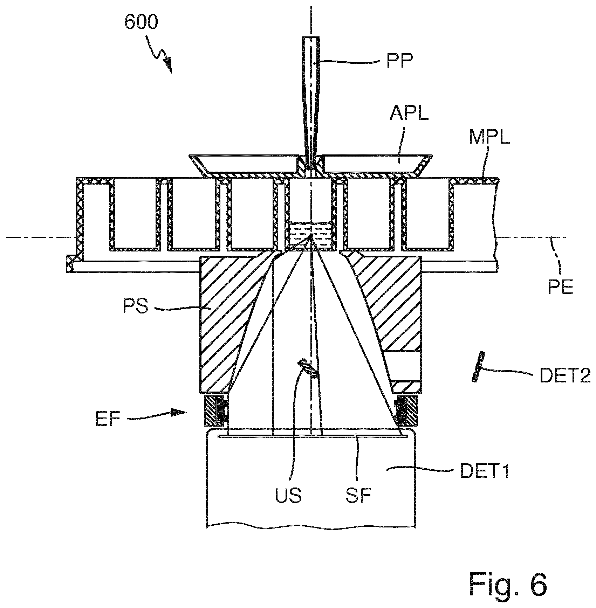

Das Ausführungsbeispiel einer Vorrichtung 600 in Fig. 6 ist in der dargestellten Konfiguration für eine Lumineszenzmessung von unten konfiguriert. Da die Lumineszenzmessung kein Anregungslicht erfordert, sind entsprechende Komponenten, die in der Gesamtvorrichtung vorhanden sind, in Fig. 6 nicht dargestellt. An der Oberseite der Mikrotiterplatte MPL ist eine lichtdichte Abdeckplatte APL angeordnet. Diese hat vorzugsweise an der zur Probe hingewandten Seite eine reflektive Beschichtung, um das isotrop von der Probe ausgesandte Lumineszenzlicht zurück in Richtung des Detektors zu reflektieren, um ein noch höheres Lumineszenzsignal zu erreichen. Mittig ist eine Durchlassöffnung für Reagenzien vorgesehen, um mithilfe einer Injektionsvorrichtung PP Reagenzien zur Auslösung einer Chemolumineszenzreaktion in die Probe einbringen zu können. Unterhalb der Probenebene PE befindet sich wieder ein als Parabolspiegel PS ausgelegter Hohlspiegel, der im Bereich seiner oben angeordneten Lichteintrittsöffnung bis unmittelbar unter die Ebene des transparenten Bodens hochgezogen ist. Um bei den Lumineszenzmessungen den Crosstalk, d.h. das Übersprechen, mit benachbarten Näpfchen zu minimieren, kann der auf dem Kopf stehende Paraboloid-Spiegel sanft von unten an die Mikroplatte MPL gedrückt werden. Die Abdeckplatte APL erfüllt auch die Aufgabe, den Crosstalk über die obere Öffnung des Näpfchens zu verhindern. Ansonsten ist der Aufbau unterhalb der Probenebene ähnlich oder identisch zum ersten Ausführungsbeispiel, weshalb auf die dortige Beschreibung verwiesen wird.

Auch hier ist die Emissionsfiltereinrichtung EF in einer filterfreien Stellung gezeigt, so dass Lumineszenzlicht ungefiltert auf die sensitive Fläche SF des ersten Detektors DET1 trifft. Lediglich ein geringer Anteil des Lumineszenzlichts, der im Wesentlichen parallel zur Hauptachse HA oder unter sehr kleinem Strahlwinkel zu diesem nach unten hindurchtritt, wird durch den schräggestellten Umlenkspiegel US abgeschattet.

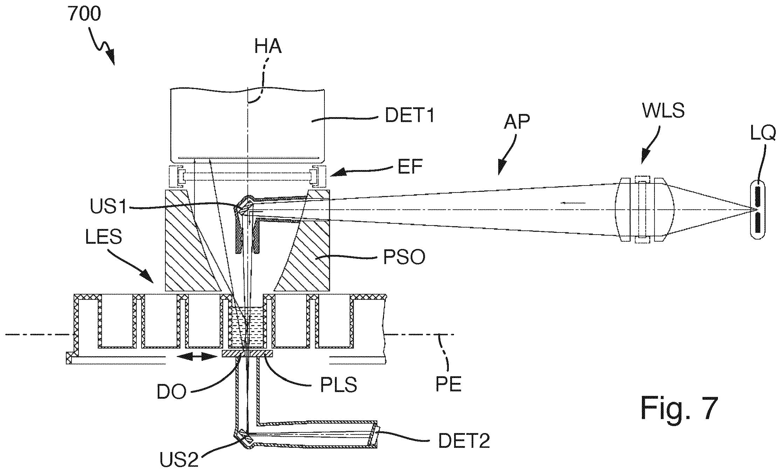

In Fig. 7 ist eine nicht zur beanspruchten Erfindung gehörende Vorrichtung 700 gezeigt, die unter anderem zur Durchführung von Nephelometrie in einer Top/Top/Anordnung geeignet. Bei dieser Anordnung verläuft der Anregungspfad AP ähnlich wie beim Ausführungsbeispiel von Fig. 2 ausgehend von der Lichtquelle LQ horizontal durch eine mit Linsen ausgestattete wellenlängenselektive Einrichtung WLS über einen auf der Hauptachse HA angeordneten Umlenkspiegel US1 von oben in die Probe hinein, die sich in der Messposition MP befindet.

An der Lichteintrittsseite LES der Probenebene PE ist ein Hohlspiegel in Form eines oberen Parabolspiegels PSO angeordnet. Dieser hat auf der unteren, der Probe zugewandten Seite eine Lichteintrittsöffnung und erweitert sich nach oben parabolisch zu einer im Durchmesser größeren Lichtaustrittsöffnung. Der obere Parabolspiegel dient zum Sammeln vom ersten Emissionslicht, welches nach oben divergent aus der Probe P austritt, also in Rückwärtsrichtung bezogen auf die Einstrahlrichtung des Anregungslichts. Optisch unmittelbar hinter der Lichtaustrittsöffnung ist oberhalb des Parabolspiegels PSO eine Emissionsfiltereinrichtung EF zur selektiven spektralen Filterung des nach oben aus dem Parabolspiegel austretenden ersten Emissionslichts angeordnet. Darüber befindet sich der erste Detektor DET1 in Form eines Photomultipliers.

Unterhalb der Probenebene PE befindet sich in der dargestellten Betriebsstellung ein in den Emissionspfad EP eingeführter Planspiegel PLS, der wahlweise in die dargestellte Position unmittelbar unterhalb des transparenten Bodens des Näpfchen oder in einer danebenliegende zurückgezogene Position außerhalb des Emissionspfades gebracht werden kann. Der Planspiegel PLS hat auf der der Probenebene PE bzw. der Proben zugewandten Seite eine ebene Spiegelfläche, die orthogonal zur Hauptachse HA verläuft, die der optischen Achse des Emissionspfades entspricht. Der Planspiegel PLS weist mittig eine Durchlassöffnung zum Hindurchlassen von zweitem Emissionslicht auf, also von Emissionslicht, das in Verlängerung des von oben kommenden Anregungslichts ohne Winkeländerung durch die Probe hindurchtritt und nach unten austritt. Dieses zweite Emissionslicht wird über einen innerhalb eines Winkelrohrs angeordneten Umlenkspiegel US2 zum zweiten Detektor DET2 umgelenkt.

Diejenigen Anteile des Emissionslichts, die gegenüber der Ausarbeitungsrichtung des Anregungslichts bezüglich ihrer Ausbreitungsrichtung verändert sind (erstes Emissionslicht) werden dagegen an der Spiegelfläche des Planspiegels PLS nach oben reflektiert und treten von unten durch den transparenten Boden und die Probe hindurch in Richtung des ersten Detektors DET1 aus. Der Planspiegel PLS dient also als geometrischer Strahlteiler im Emissionspfad und sorgt dafür, dass der Emissionspfad für das erste Emissionslicht durch den Hohlspiegel hindurch zum ersten Detektor DET1 führt.

Mit dieser Anordnung kann Nephelometrie betrieben werden, indem das von Streupartikeln ausgehende Streulicht (erstes Emissionslicht) mit Hilfe des Parabolspiegels PSO aufgesammelt und dem darüber befindlichen ersten Detektor DET1 zugeführt wird. Dieser Teil des Streulichts zeigt bezüglich der Richtung des Anregungslichts nach hinten (also in einem Winkel von mehr als 90° bis 180° zur optischen Achse) und wird als Rückwärtsstreuung bezeichnet.

Man kann die Anordnung gleichzeitig auch für Absorptionsmessung oder Turbidimetrie nutzen, indem die vom zweiten Detektor DET2 generierten zweiten Signale ausgewertet werden. Damit nur das durch Absorption und/oder Streuung abgeschwächte Emissionslicht erfasst wird, verwendet man unterhalb des transparenten Bodens die durch den Planspiegel PLS gebildete Blende, deren Durchlassöffnung geringfügig größer als der Strahldurchmesser des zweiten Emissionslichts ist. Führt man, wie in den Darstellungen gezeigt, diese Blende als nach oben weisenden Planspiegel mit einer Mittelbohrung für das nicht winkelveränderte, durchgehende zweite Emissionslicht aus (Bodenspiegel), so wird dieser Spiegel das Emissionslicht, das außerhalb der Durchtrittsöffnung auf die Spiegelfläche auftrifft, zurückwerfen in Richtung der oberen Öffnung des Probenbehälters und in Richtung des ersten Detektors.

Es ist zu beachten, dass derjenige Anteil des ersten Emissionslichts, welcher an der Spiegelfläche des Planspiegels PLS reflektiert und dann durch die Probe zurück Richtung ersten Detektor reflektiert wird, als Vorwärtsstreuung angesehen werden kann, die in einem Winkel von weniger als 90° zur optischen Achse generiert wird.

Alternativ zur Darstellung kann der zweite Detektor DET2 auch direkt unter dem Bodenspiegel PLS angeordnet werden, also ohne zweiten Umlenkspiegel. Mit der gleichen Anordnung kann bei Einsetzen von Anregungsfiltern im Anregungsstrahlengang und Emissionsfiltern bzw. Sperrfiltern im Emissionsstrahlengang vor dem ersten Detektor DET1 auch Fluoreszenzmessung in Kombination mit Turbidimetrie und/oder Absorptionsmessung betrieben werden.

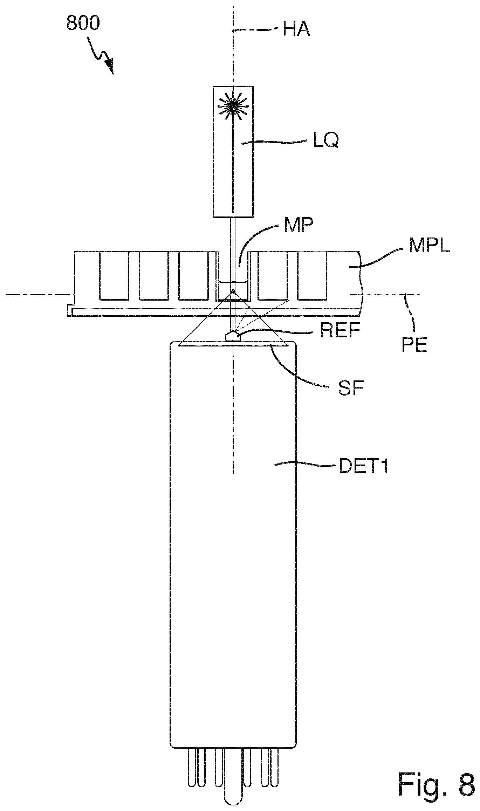

In Fig. 8 ist ein Beispiel einer nicht zur beanspruchten Erfindung gehörende Vorrichtung 800 mit relativ einfacher Konstruktion gezeigt. Diese umfasst keinen Hohlspiegel. Als Lichtquelle LQ wird ein Laser verwendet, dessen paralleles Lichtbündel als Anregungslicht parallel zur Hauptachse HA von oben in die Probe eingestrahlt wird. Bei diesem Ausführungsbeispiel gibt es keine Sammeloptik zum Sammeln des nach unten divergent aus dem Probenvolumen austretenden Streulichts. Vielmehr ist der erste Detektor DET1 in Form eines Photomultipliers so nahe an die Unterseite der Probenebene herangerückt, dass sämtliches Streulicht, welches im Probenvolumen erzeugt wird und dann durch den transparenten Boden divergent nach unten austritt, direkt bzw. unmittelbar auf die sensitive Fläche SF des ersten Detektors DET1 trifft. Das Streulicht wird also mit dem nahe dem Probennäpfchen angeordneten Detektoreingang direkt gemessen.

Die geometrische Trennung von direkt durch die Probe hindurchgehendem Anregungslicht (Laserstrahlung) und Streulicht erfolgt hier mithilfe eines auf der Hauptachse HA unmittelbar vor dem Detektorfenster angeordneten Reflektors REF mit kegelförmiger Reflektorfläche. Die von der Reflektorfläche reflektierte Anregungsstrahlung wird aufgrund der Kegelform nicht in Richtung des in der Messposition MP angeordneten Näpfchens, sondern in unkritische Bereiche seitlich neben diesem Näpfchen reflektiert. Diese Anordnung kommt ohne zweiten Detektor und ohne Hohlspiegel aus und ist vor allem für nephelometrische Messungen vorgesehen.

## Patentansprüche

1. Vorrichtung zur Ermittlung optischer Eigenschaften von Proben, die in einer Matrixanordnung in Näpfchen einer Mikrotiterplatte (MPL) angeordnet sind, umfassend:
eine Lichtquellenanordnung mit wenigstens einer Lichtquelle (LQ);
einen Anregungspfad (AP) zur Übertragung von Licht der Lichtquelle als Anregungslicht von einer Lichteintrittsseite (LES) in eine in einer Probenebene (PE) liegende Messposition (MP), in der eine Probe (P) angeordnet oder anordenbar ist, die in einem mit transparentem Boden (B) ausgestatteten Näpfchen (PB) einer Mikrotiterplatte (MPL) aufgenommen ist,
einen ersten Detektor (DET1);
einen winkel-selektiven Emissionspfad (EP), der von einer gegenüber der Lichteintrittsseite (LES) liegenden Lichtaustrittsseite (LAS) der Messposition zum ersten Detektor (DET1) führt und der derart ausgebildet ist, dass ein Anteil von durch Wechselwirkung zwischen Anregungslicht und Probe entstandenem ersten Emissionslicht, welches gegenüber dem Anregungslicht winkelverändert ist, auf eine sensitive Fläche des ersten Detektors (DET1) fällt und zweites Emissionslicht, welches gegenüber dem Anregungslicht nicht winkelverändert ist, nicht zum ersten Detektor (DET1) gelangt, wobei
im Emissionspfad (EP) ein Hohlspiegel (PS) mit einer zu einer optischen Achse des Emissionspfades rotationssymmetrischen Spiegelfläche (SPF) zum Sammeln von divergent aus der Probe austretendem ersten Emissionslicht angeordnet ist, wobei der Hohlspiegel an einer der Probenebene zugewandten Lichteintrittsseite eine Lichteintrittsöffnung (LEO) aufweist und sich zu einer dem ersten Detektor (DET1) optisch zugewandten Lichtaustrittsöffnung (LAO) erweitert,
wobei der Hohlspiegel (PS) unterhalb der Probenebene (PE) derart angeordnet ist, dass die Lichteintrittsöffnung (LEO) oberhalb der Lichtaustrittsöffnung (LAO) des Hohlspiegels (PS) liegt.

2. Vorrichtung nach Anspruch 1, wobei der Hohlspiegel als Parabolspiegel (PS) oder als angenäherter Parabolspiegel ausgelegt ist.

3. Vorrichtung nach Anspruch 2, wobei der Parabolspiegel so ausgelegt und angeordnet ist, dass ein Brennpunkt des Parabolspiegels im Bereich des Messvolumens in der Probe oberhalb des transparenten Bodens (B) des Näpfchens liegt.

4. Vorrichtung nach einem der vorhergehenden Ansprüche, wobei der erste Detektor (DET1) eine sensitive Fläche (SF) aufweist, die größer ist als die Lichtaustrittsöffnung (LAO) des Hohlspiegels (PS).

5. Vorrichtung nach einem der vorhergehenden Ansprüche, umfassend einen zweiten Detektor (DET2) zur Detektion von zweitem Emissionslicht, wobei vorzugsweise der zweite Detektor (DET2) eine sensitive Fläche aufweist, die geneigt zur optischen Achse des Emissionspfads am Ort des zweiten Detektors orientiert ist.

6. Vorrichtung nach Anspruch 5, wobei der Emissionspfad (EP) einen auf der optischen Achse des Hohlspiegels angeordneten Umlenkspiegel (US) zur Umlenkung des zweiten Emissionslichts in Richtung des zweiten Detektors (DET2) aufweist.

7. Vorrichtung nach Anspruch 6, wobei der Umlenkspiegel (US) im Inneren einer Reflexionskammer des Hohlspiegels zwischen der Lichteintrittsöffnung (LEO) und der Lichtaustrittsöffnung (LAO) des Hohlspiegels angeordnet ist, wobei vorzugsweise der Umlenkspiegel (S) in einem lichtundurchlässigen Winkelrohr (WR) angeordnet ist, das einen ersten Rohrabschnitt zum Empfangen des zweiten Emissionslichts und einen im Winkel zum ersten Rohrabschnitt angeordneten zweiten Rohrabschnitt zum Hinausleiten des am Umlenkspiegel reflektierten zweiten Emissionslichts in Richtung des zweiten Detektors (DET2) aufweist.

8. Vorrichtung nach einem der vorhergehenden Ansprüche, wobei der Emissionspfad so ausgelegt ist, dass das zweite Emissionslicht ohne Umlenkung zu einem Absorber, einer Lichtfalle oder einem zweiten Detektor (DET2) durchgeht, während das erste Emissionslicht über einen ebenen Umlenkspiegel (US3) in Richtung des ersten Detektors (DET1) umgelenkt wird.

9. Vorrichtung nach einem der vorhergehenden Ansprüche, wobei im Emissionspfad (EP) eine zwischen mehreren Betriebsstellungen umschaltbare Emissionsfiltereinrichtung (EF) zur selektiven Filterung von erstem Emissionslicht vor Eintritt in den ersten Detektor (DET1) angeordnet ist, wobei die Emissionsfiltereinrichtung (EF) vorzugsweise eine filterfreie Betriebsstellung aufweist, in welcher Streulicht ohne Filterung hindurchtreten kann.

10. Vorrichtung nach einem der vorhergehenden Ansprüche, wobei die Vorrichtung an der Lichteintrittsseite (LES) der Probenebene (PE) einen vorzugsweise als Parabolspiegel ausgebildeten Hohlspiegel (PSO) zum Sammeln von divergenter Rückwärtsstrahlung aufweist, wobei der Hohlspiegel an seiner der Probenebene (PE) zugewandten Seite eine Lichteintrittsöffnung aufweist und sich zu einer im Durchmesser größeren Lichtaustrittsöffnung erweitert, wobei vorzugsweise dem Hohlspiegel ein dritter Detektor (DET3) nachgeschaltet ist.

11. Vorrichtung nach einem der vorhergehenden Ansprüche, umfassend Einrichtungen zur stufenlosen oder schrittweisen Einstellung der Wellenlänge des Anregungslichts, wobei vorzugsweise eine der folgenden Bedingungen gilt:
die Lichtquelle (LQ) ist eine polychromatische Lichtquelle und im Anregungspfad (AP) ist zwischen der Lichtquelle (LQ) und der Messposition (MP) eine einstellbare wellenlängenselektive Einrichtung (WLS) angeordnet;
eine Lichtquellenanordnung weist mehrere Lichtquellen (LQ1, LQ2) zur Abgabe unterschiedlicher Wellenlängen sowie eine Lichtquellenselektionseinrichtung zur Auswahl einer der Lichtquellen auf.

12. Vorrichtung nach einem der vorhergehenden Ansprüche, wobei die Lichtquelle (LQ) ein Laser ist.

13. Vorrichtung nach einem der vorhergehenden Ansprüche, wobei im Emissionspfad (EP) zwischen dem Hohlspiegel (PS) und dem Detektor eine sammelnd wirkende Linsenoptik (LO) angeordnet ist.

14. Vorrichtung nach einem der vorhergehenden Ansprüche, wobei die Vorrichtung so konfiguriert ist, dass wenigstens zwei unterschiedliche Betriebsmodi aus der folgenden Gruppe nutzbar sind:
ein erster Betriebsmodus, bei dem erste Signale zur Ermittlung einer die Intensität des Streulichts repräsentierenden ersten Messgröße verarbeitet werden (Nephelometrie-Modus);
ein zweiter Betriebsmodus, bei dem zwischen der Messposition (MP) und dem ersten Detektor (DET1) eine wellenlängenselektive Einrichtung zur Blockung von Anregungslicht und zum Hindurchlassen von gegenüber dem Anregungslicht zu größeren Wellenlängen verschobenem Fluoreszenzlicht angeordnet wird und erste Signale zur Ermittlung einer die Intensität von Fluoreszenzlicht repräsentierenden zweiten Messgröße verarbeitet werden (Vorwärts-Fluoreszenz-Modus);
ein dritter Betriebsmodus, bei dem zweite Signale zur Ermittlung einer die Intensität des zweiten Emissionslichts repräsentierenden dritten Messgröße verarbeitet werden (Lichtverlust-Modus);
ein vierter Betriebsmodus, bei dem erste Signale und zweite Signale gemeinsam verarbeitet werden (Kombinations-Modus)

15. Vorrichtung nach Anspruch 14, wobei im vierten Betriebsmodus erste Signale und zweite Signale gemeinsam derart verarbeitet werden, dass mithilfe der ersten Signale eine Korrektur der auf Basis der zweiten Signale ermittelten Messgröße durchgeführt wird und/oder unter Verwendung der zweiten Signale eine Korrektur der auf Basis der ersten Signale ermittelten Messgröße vorgenommen wird.

## Claims

1. Apparatus for determining optical properties of samples arranged in a matrix arrangement in wells of a microtiter plate (MPL), comprising:
a light source arrangement having at least one light source (LQ);
an excitation path (AP) for transferring light from the light source as excitation light from a light entrance side (LES) into a measurement position (MP) which lies in a sample plane (PE) and in which is arranged or arrangeable a sample (P) accommodated in a well (PB) of a microtiter plate (MPL), said well being equipped with a transparent base (B),
a first detector (DET1);
an angle-selective emission path (EP) which leads from a light exit side (LAS) of the measurement position, said light exit side being situated opposite the light entrance side (LES), to the first detector (DET1) and which is embodied in such a way that a portion of first emission light, which has resulted from interaction between excitation light and sample and which is angularly altered relative to the excitation light, is incident on a sensitive surface of the first detector (DET1) and second emission light, which is not angularly altered relative to the excitation light, does not reach the first detector (DET1), wherein
there is arranged in the emission path (EP) a concave mirror (PS) having a mirror surface (SPF), which is rotationally symmetrical with respect to an optical axis of the emission path, for collecting first emission light emerging divergently from the sample, wherein the concave mirror has a light entrance opening (LEO) on a light entrance side facing the sample plane and widens towards a light exit opening (LAO) optically facing the first detector (DET1), wherein
the concave mirror (PS) is arranged below the sample plane (PE) in such a way that the light entrance opening (LEO) lies above the light exit opening (LAO) of the concave mirror (PS).

2. Apparatus according to Claim 1, wherein the concave mirror is designed as a parabolic mirror (PS) or as an approximate parabolic mirror.

3. Apparatus according to Claim 2, wherein the parabolic mirror is designed and arranged such that a focal point of the parabolic mirror lies in the region of the measurement volume in the sample above the transparent base (B) of the well.

4. Apparatus according to any of the preceding claims, wherein the first detector (DET1) has a sensitive surface (SF) which is larger than the light exit opening (LAO) of the concave mirror (PS).

5. Apparatus according to any of the preceding claims, comprising a second detector (DET2) for detecting second emission light, wherein preferably the second detector (DET2) has a sensitive surface which is oriented in a manner inclined with respect to the optical axis of the emission path at the location of the second detector.

6. Apparatus according to Claim 5, wherein the emission path (EP) has a deflection mirror (US) arranged on the optical axis of the concave mirror and serving for deflecting the second emission light in the direction of the second detector (DET2).

7. Apparatus according to Claim 6, wherein the deflection mirror (US) is arranged in the interior of a reflection chamber of the concave mirror between the light entrance opening (LEO) and the light exit opening (LAO) of the concave mirror, wherein preferably the deflection mirror (S) is arranged in a light-nontransmissive angled tube (WR) having a first tube section for receiving the second emission light and a second tube section, arranged at an angle to the first tube section, for enabling the second emission light reflected at the deflection mirror to be guided out in the direction of the second detector (DET2).

8. Apparatus according to any of the preceding claims, wherein the emission path is designed such that the second emission light passes through without deflection to an absorber, a light trap or a second detector (DET2), while the first emission light is deflected via a plane deflection mirror (US3) in the direction of the first detector (DET1).

9. Apparatus according to any of the preceding claims, wherein there is arranged in the emission path (EP) an emission filter device (EF) switchable between a plurality of operating positions and serving for the selective filtering of first emission light before entry into the first detector (DET1), wherein the emission filter device (EF) preferably has a filter-free operating position in which scattered light can pass through without filtering.

10. Apparatus according to any of the preceding claims, wherein the apparatus has, on the light entrance side (LES) of the sample plane (PE), a concave mirror (PSO) preferably embodied as a parabolic mirror and serving for collecting divergent backward radiation, wherein the concave mirror has a light entrance opening on its side facing the sample plane (PE) and widens towards a light exit opening of larger diameter, wherein preferably a third detector (DET3) is disposed downstream of the concave mirror.

11. Apparatus according to any of the preceding claims, comprising devices for the continuously variable or stepwise adjustment of the wavelength of the excitation light, wherein preferably one of the following conditions holds true:
the light source (LQ) is a polychromatic light source and an adjustable wavelength-selective device (WLS) is arranged in the excitation path (AP) between the light source (LQ) and the measurement position (MP);
a light source arrangement has a plurality of light sources (LQ1, LQ2) for emitting different wavelengths and also a light source selection device for selecting one of the light sources.

12. Apparatus according to any of the preceding claims, wherein the light source (LQ) is a laser.

13. Apparatus according to any of the preceding claims, wherein a lens optical unit (LO) having a converging effect is arranged in the emission path (EP) between the concave mirror (PS) and the detector.

14. Apparatus according to any of the preceding claims, wherein the apparatus is configured such that at least two different operating modes from the following group are usable:
a first operating mode, in which first signals for determining a first measurement variable representing the intensity of the scattered light are processed (nephelometry mode);
a second operating mode, in which a wavelength-selective device for blocking excitation light and for transmitting fluorescent light shifted to longer wavelengths relative to the excitation light is arranged between the measurement position (MP) and the first detector (DET1) and first signals for determining a second measurement variable representing the intensity of fluorescent light are processed (forward fluorescence mode);
a third operating mode, in which second signals for determining a third measurement variable representing the intensity of the second emission light are processed (light loss mode);
a fourth operating mode, in which first signals and second signals are processed jointly (combination mode).

15. Apparatus according to Claim 14, wherein in the fourth operating mode first signals and second signals are processed jointly in such a way that a correction of the measurement variable determined on the basis of the second signals is carried out with the aid of the first signals and/or a correction of the measurement variable determined on the basis of the first signals is performed using the second signals.

## Revendications

1. Appareil pour déterminer des propriétés optiques d'échantillons qui sont disposés en un arrangement en matrice dans les coupelles d'une plaque microtitre (MPL), comprenant :
un arrangement de sources de lumière comprenant au moins une source de lumière (LQ) ;
un trajet d'excitation (AP) pour la transmission de lumière de la source de lumière en tant que lumière d'excitation depuis un côté d'entrée de lumière (LES) dans une position de mesure (MP) se trouvant dans un plan d'échantillon (PE), dans laquelle est disposé ou peut être disposé un échantillon (P) accueilli dans une coupelle (PB) d'une plaque microtitre (MPL) équipée d'un fond transparent (B),
un premier détecteur (DET1) ;
un trajet d'émission (EP) sélectif en angle, qui mène d'un côté de sortie de lumière (LAS) de la position de mesure située à l'opposé du côté d'entrée de lumière (LES) vers le premier détecteur (DET1) et qui est réalisée de telle sorte qu'une partie d'une première lumière d'émission générée par l'interaction entre la lumière d'excitation et l'échantillon, laquelle est modifiée angulairement par rapport à la lumière d'excitation, est incidente sur une surface sensible du premier détecteur (DET1) et qu'une deuxième lumière d'émission, laquelle n'est pas modifiée angulairement par rapport à la lumière d'excitation, n'atteint pas le premier détecteur (DET1),
un miroir concave (PS) ayant une surface de miroir (SPF) symétrique de rotation par rapport à un axe optique du trajet d'émission étant disposé dans le trajet d'émission (EP) pour collecter la première lumière d'émission qui sort de manière divergente de l'échantillon, le miroir concave présentant une ouverture d'entrée de lumière (LEO) sur un côté d'entrée de lumière tourné vers le plan d'échantillon et s'élargissant vers une ouverture de sortie de lumière (LAO) tournée optiquement vers le premier détecteur (DET1),
le miroir concave (PS) étant disposé en dessous du plan d'échantillon (PE) de telle sorte que l'ouverture d'entrée de lumière (LEO) se situe au-dessus de l'ouverture de sortie de lumière (LAO) du miroir concave (PS).

2. Appareil selon la revendication 1, dans lequel le miroir concave est conçu sous forme de miroir parabolique (PS) ou de miroir approximativement parabolique.

3. Appareil selon la revendication 2, dans lequel le miroir parabolique est conçu et disposé de telle sorte qu'un foyer du miroir parabolique se situe dans la zone du volume de mesure dans l'échantillon au-dessus du fond transparent (B) de la coupelle.

4. Appareil selon l'une des revendications précédentes, dans lequel
le premier détecteur (DET1) présente une surface sensible (SF) qui est plus grande que l'ouverture de sortie de lumière (LAO) du miroir concave (PS).

5. Appareil selon l'une des revendications précédentes, comprenant un deuxième détecteur (DET2) pour la détection d'une deuxième lumière d'émission, le deuxième détecteur (DET2) présentant de préférence une surface sensible qui est orientée de manière inclinée par rapport à l'axe optique du trajet d'émission à l'emplacement du deuxième détecteur.

6. Appareil selon la revendication 5, dans lequel le trajet d'émission (EP) comporte un miroir de renvoi (US) disposé sur l'axe optique du miroir concave pour dévier la deuxième lumière d'émission dans la direction du deuxième détecteur (DET2).

7. Appareil selon la revendication 6, dans lequel le miroir de renvoi (US) est disposé à l'intérieur d'une chambre de réflexion du miroir concave entre l'ouverture d'entrée de lumière (LEO) et l'ouverture de sortie de lumière (LAO) du miroir concave, le miroir de renvoi (S) étant de préférence disposé dans un tube coudé (WR) opaque à la lumière, qui présente une première section de tube servant à recevoir la deuxième lumière d'émission et une deuxième section de tube disposée selon un certain angle par rapport à la première section de tube pour extraire la deuxième lumière d'émission réfléchie par le miroir de renvoi dans la direction du deuxième détecteur (DET2).

8. Appareil selon l'une des revendications précédentes, dans lequel
le trajet d'émission est configuré de telle sorte que la deuxième lumière d'émission traverse, sans déviation vers un absorbeur, un piège à lumière ou un deuxième détecteur (DET2), tandis que la première lumière d'émission est déviée par l'intermédiaire d'un miroir de renvoi plan (US3) dans la direction du premier détecteur (DET1).

9. Appareil selon l'une des revendications précédentes, dans lequel
un dispositif de filtrage d'émission (EF) commutable entre plusieurs positions de fonctionnement est disposé dans le trajet d'émission (EP), pour le filtrage sélectif d'une première lumière d'émission avant son entrée dans le premier détecteur (DET1), le dispositif de filtrage d'émission (EF) possédant de préférence une position de fonctionnement sans filtre dans laquelle une lumière parasite peut passer sans filtrage.

10. Appareil selon l'une des revendications précédentes, dans lequel
l'appareil présente, sur le côté d'entrée de lumière (LES) du plan d'échantillon (PE), un miroir concave (PSO) de préférence réalisé sous forme de miroir parabolique, pour collecter un rayonnement divergent vers l'arrière, le miroir concave présentant, sur son côté tourné vers le plan d'échantillon (PE), une ouverture d'entrée de lumière et s'élargissant vers une ouverture de sortie de lumière de plus grand diamètre, un troisième détecteur (DET3) étant de préférence monté en aval du miroir concave.

11. Appareil selon l'une des revendications précédentes, comprenant des dispositifs destinés au réglage continu ou pas-à-pas de la longueur d'onde de la lumière d'excitation, dans lequel l'une des conditions suivantes est de préférence satisfaite :
la source de lumière (LQ) est une source de lumière polychromatique et, dans le trajet d'excitation (AP), un dispositif réglable sélectif en longueur d'onde (WLS) est disposé entre la source de lumière (LQ) et la position de mesure (MP) ;
un arrangement de sources de lumière comporte plusieurs sources de lumière (LQ1, LQ2) pour l'émission de différentes longueurs d'onde ainsi qu'un dispositif de sélection de source de lumière pour la sélection de l'une des sources de lumière.

12. Appareil selon l'une des revendications précédentes, dans lequel la source de lumière (LQ) est un laser.

13. Appareil selon l'une des revendications précédentes, dans lequel une optique à lentilles (LO) à effet collecteur est disposée dans le trajet d'émission (EP) entre le miroir concave (PS) et le détecteur.

14. Appareil selon l'une des revendications précédentes, dans lequel
l'appareil est configuré de telle sorte qu'il est possible d'utiliser au moins deux modes de fonctionnement différents appartenant au groupe suivant :
un premier mode de fonctionnement, dans lequel des premiers signaux sont traités pour déterminer une première grandeur de mesure représentant l'intensité de la lumière diffusée (mode néphélométrique) ;
un deuxième mode de fonctionnement, dans lequel, entre la position de mesure (MP) et le premier détecteur (DET1), est disposé un dispositif sélectif en longueur d'onde destiné à occulter la lumière d'excitation et à laisser passer une lumière de fluorescence décalée vers de plus grandes longueurs d'onde par rapport à la lumière d'excitation, et des premiers signaux sont traités pour déterminer une deuxième grandeur de mesure représentant l'intensité de la lumière de fluorescence (mode de fluorescence vers l'avant) ;
un troisième mode de fonctionnement, dans lequel des deuxièmes signaux sont traités pour déterminer une troisième grandeur de mesure représentant l'intensité de la deuxième lumière d'émission (mode de perte de lumière) ;
un quatrième mode de fonctionnement, dans lequel des premiers signaux et des deuxièmes signaux sont traités ensemble (mode de combinaison).

15. Appareil selon la revendication 14, dans lequel, dans le quatrième mode de fonctionnement, les premiers signaux et les deuxièmes signaux sont traités ensemble de telle sorte qu'à l'aide des premiers signaux, une correction de la grandeur de mesure déterminée sur la base des deuxièmes signaux est effectuée et/ou qu'en utilisant les deuxièmes signaux, une correction de la grandeur de mesure déterminée sur la base des premiers signaux est effectuée.
